# EUROPEAN PATENT SPECIFICATION

(11) **EP 2 201 063 B1**
(45) Date of publication and mention of the grant of the patent: **06.07.2011**
(21) Application number: 08799100.6
(22) Date of filing: 03.09.2008
(51) Int. Cl.: C08J 5/18, C08L 83/04, C09D 4/00, C09D 183/04, C08J 5/00, C08K 7/08

(54) **REINFORCED SILICONE RESIN FILM AND NANOFIBER-FILLED SILICONE COMPOSITION**
FOLIE AUS VERSTÄRKTEM SILIKONHARZ UND NANOFASERGEFÜLLTE SILIKONZUSAMMENSETZUNG
FILM DE RÉSINE DE SILICONE RENFORCÉE ET COMPOSITION DE SILICONE CHARGÉE DE NANOFIBRES

(30) Priority: 12.10.2007 US 979446 P
(43) Date of publication of application: 30.06.2010
(73) Proprietor: Dow Corning Corporation, Midland, Michigan 48686-0994 (US)
(72) Inventor: ZHU, Bizhong, Midland MI 48640 (US)
(74) Representative: Thomson, Craig Richard
(86) International application number: PCT/US2008/075093
(87) International publication number: WO 2009/048694

(56) References cited:
- WO-A-2004/060472
- WO-A-2007/092118
- WO-A-2007/097835
- DE-A1- 19 915 378
- DATABASE INSPEC [Online] THE INSTITUTION OF ELECTRICAL ENGINEERS, STEVENAGE, GB; 2002, ZHU H Y ET AL: "Novel synthesis of aluminium oxide nanofibers" XP002505961 Database accession no. 7613743 & NANOPHASE AND NANOCOMPOSITE MATERIALS IV. SYMPOSIUM 26-29 NOV. 2001 BOSTON, MA, USA (MATERIALS RESEARCH SOCIETY SYMPOSIUM PROCEEDINGS VOL.703), 2002, pages 25-30, Mater. Res. Soc Warrendale, PA, USA ISBN: 1-55899-639-7
- GARUDADHWAJ HOTA ET AL: "Fabrication and characterization of a boehmite nanoparticle impregnated electrospun fiber membrane for removal of metal ions" JOURNAL OF MATERIALS SCIENCE, KLUWER ACADEMIC PUBLISHERS, BO, vol. 43, no. 1, 28 September 2007 (2007-09-28), pages 212-217, XP019553041 ISSN: 1573-4803

## Description

### FIELD OF THE INVENTION

The present invention relates to a reinforced silicone resin film and more particularly to a reinforced silicone resin film comprising at least one polymer layer, wherein at least one of the polymer layers comprises a cured product of at least one silicone resin, and at least one of the polymer layers comprises aluminum oxide nanofibers, wherein the nanofibers comprise at least one aluminum oxide selected from γ-AlO(OH) and γ-Al₂O₃. The present invention also relates to a nanofiber-filled silicone composition comprising a curable silicone composition comprising a silicone resin, and aluminum oxide nanofibers.

### BACKGROUND OF THE INVENTION

Silicone resins are useful in a variety of applications by virtue of their unique combination of properties, including high thermal stability, good moisture resistance, excellent flexibility, high oxygen resistance, low dielectric constant, and high transparency. For example, silicone resins are widely used as protective or dielectric coatings in the automotive, electronic, construction, appliance, and aerospace industries.

Although silicone resin coatings can be used to protect, insulate, or bond a variety of substrates, free standing silicone resin films have limited utility due to low tear strength, high brittleness, low glass transition temperature, and high coefficient of thermal expansion. Consequently, there is a need for free standing silicone resin films having improved mechanical and thermal properties.

### SUMMARY OF THE INVENTION

The present invention is directed to a reinforced silicone resin film comprising at least one polymer layer, wherein at least one of the polymer layers comprises a cured product of at least one silicone resin, and at least one of the polymer layers comprises aluminum oxide nanofibers, wherein the nanofibers comprise at least one aluminum oxide selected from γ-AlO(OH) and γ-Al₂O₃.

The present invention is also directed to a nanofiber-filled silicone composition comprising:
(A) a curable silicone composition comprising a silicone resin; and
(B) aluminum oxide nanofibers, wherein the nanofibers comprise at least one aluminum oxide selected from γ-AlO(OH) and γ-Al₂O₃.

The reinforced silicone resin film of the present invention has low coefficient of thermal expansion, and exhibits high resistance to thermally induced cracking.

The reinforced silicone resin film of the present invention is useful in applications requiring films having high thermal stability, flexibility, mechanical strength, and transparency. For example, the silicone resin film can be used as an integral component of flexible displays, solar cells, flexible electronic boards, touch screens, fire-resistant wallpaper, and impact-resistant windows. The film is also a suitable substrate for transparent or nontransparent electrodes.

### BRIEF DESCRIPTION OF THE DRAWINGS

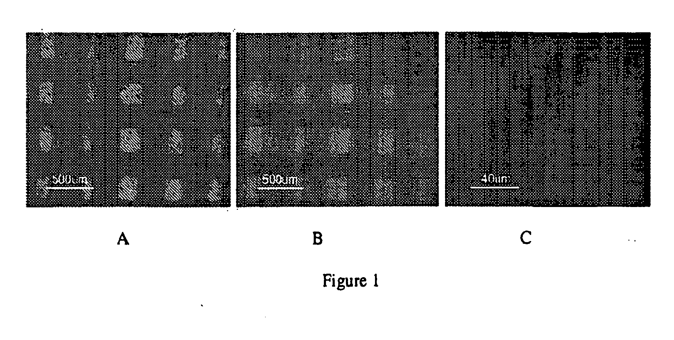

Figures 1A, 1B, and 1C are plan view (i.e., top view) photomicrographs of the reinforced silicone resin film of Example 3 after heat treatment.

### DETAILED DESCRIPTION OF THE INVENTION

As used herein, the term "boehmite" refers to γ-aluminum oxide hydroxide having the formula γ-AlO(OH), and vice-versa.

A reinforced silicone resin film according to the present invention comprises at least one polymer layer, wherein at least one of the polymer layers comprises a cured product of at least one silicone resin, and at least one of the polymer layers comprises aluminum oxide nanofibers, wherein the nanofibers comprise at least one aluminum oxide selected from γ-AlO(OH) and γ-Al₂O₃.

Each of the polymer layers of the reinforced silicone resin film typically has a thickness of from 0.01 to 1000 µm, alternatively from 5 to 500 µm, alternatively from 10 to 100 µm.

Each of the polymer layers of the reinforced silicone resin film can comprise a thermoplastic polymer or a thermoset polymer. The thermoplastic or thermoset polymer can be a homopolymer or a copolymer. Moreover, the thermoplastic or thermoset polymer can be a silicone polymer or an organic polymer. As used herein and below, the term "thermoplastic polymer" refers to a polymer that has the property of converting to a fluid (flowable) state when heated and of becoming rigid (nonflowable) when cooled. Also, the term "thermoset polymer" refers to a cured (i.e., cross-linked) polymer that does not convert to a fluid state on heating.

Examples of thermoplastic polymers include, but are not limited to thermoplastic silicone polymers such as poly(diphenylsiloxane-co-phenylmethylsiloxane); and thermoplastic organic polymers such as polyolefins, polysulfones, polyacrylates and polyetherimides.

Examples of thermoset polymers include, but are not limited to, thermoset silicone polymers such as cured silicone elastomers, silicone gels, and cured silicone resins; and thermoset organic polymers such as epoxy resins, cured amino resins, cured polyurethanes, cured polyimides, cured phenolic resins, cured cyanate ester resins, cured bismaleimide resins, cured polyesters, and cured acrylic resins.

Adjacent polymer layers of the reinforced silicone resin film differ in at least one of numerous physical and chemical properties, including thickness, polymer composition, cross-link density, and concentration of carbon nanomaterial or other reinforcement.

The reinforced silicone resin film typically comprises from 1 to 100 polymer layers, alternatively from 1 to 10 polymer layers, alternatively from 2 to 5 polymer layers.

At least one of the polymer layers of the reinforced silicone resin film comprises a cured product of at least one silicone resin. As used herein, the term "cured product of at least one silicone resin" refers to a cross-linked product of at least one silicone resin, the product having a three-dimensional network structure. The silicone resin, methods of preparing the resin, and methods of preparing the cured product of the silicone resin are described below in the method of preparing the reinforced silicone resin film of the present invention.

At least one of the polymer layers of the reinforced silicone resin film comprises aluminum oxide nanofibers. As used herein, the term "aluminum oxide nanofibers" refers to aluminum oxide fibrils and aggregates of fibrils having an average width less than about 400 nm, as determined by transmission electron microscopy (TEM) using the methods described in the Examples section below. The aluminum oxide nanofibers may comprise fibrils, or a mixture of fibrils and aggregates, as determined by TEM. The term "fibril" refers to fibers which appear to be singular, i.e., do not appear to have a substructure when viewed by TEM. The aggregates contain two or more associated fibrils. Moreover, the fibrils within an aggregate are typically aligned substantially parallel to one another.

The fibrils typically have an average width of from 1 to 20 nm, alternatively from 1 to 10 nm, alternatively from 2 to 6 nm, where the width of a fibril is the maximum diameter of the fibril.

The aggregates typically have an average width of from 4 to 400 nm, alternatively from 10 to 300 nm, alternatively from 50 to 200 nm, where the width of an aggregate is the maximum dimension of the aggregate measured perpendicular to the longitudinal axes of the fibrils.

The aluminum oxide nanofibers typically comprise from 0 to 100% (w/w) of γ-AlO(OH) and from 100 to 0% (w/w) of γ-Al₂O₃, alternatively from 30 to 99% (w/w) of γ-AlO(OH) and from 70 to 1% (w/w) of γ-Al₂O₃, alternatively from 40 to 60% (w/w) of γ-AlO(OH) and from 60 to 40% (w/w) of γ-Al₂O₃, based on the total (dry) weight of the nanofibers, as determined by X-ray diffraction. Also, the sum of the percent by weight of γ-AlO(OH) and percent by weight of γ-Al₂O₃ is 100% (w/w). The dry weight of the aluminum oxide nanofibers may be determined by heating a sample of the dispersion under atmospheric pressure at temperature of 150 °C for 1 h to remove the solvent.

The aluminum oxide nanofibers can be untreated nanofibers or treated nanofibers prepared by treating a dispersion comprising the aluminum oxide nanofibers and a solvent with an organosilicon compound, as described below. The organosilicon compound can be any of the organosilicon compounds typically used to treat silica fillers, with the exception of compounds such as halosilanes that react with water to produce a strong acid. Suitable organosilicon compounds and methods of treating the dispersion are as described below in the method of preparing the aluminum oxide dispersion of the present invention.

Examples of aluminum oxide nanofibers include, but are not limited to, nanofibers containing 100% (w/w) of γ-AlO(OH) and 0% (w/w) of γ-Al₂O_{3,} nanofibers containing 99% (w/w) of γ-AlO(OH) and 1%(w/w) of γ-Al₂O_{3,} nanofibers containing 90% (w/w) of γ-AlO(OH) and 10% (w/w) of -γAl₂O₃, and treated nanofibers prepared by treating the aforementioned aluminum oxide nanofibers with an organosilicon compound.

The aluminum oxide nanofibers can be a single type of nanofiber or a mixture comprising nanofibers that differ in at least one of the following properties: size, shape, proportion by weight of γ-AlO(OH) and γ-Al₂O₃, or type or extent of treatment.

The concentration of the aluminum oxide nanofibers in the polymer layer is typically from 0.001 to 50% (w/w), alternatively from 0.1 to 10% (w/w), alternatively from 0.5 to 5% (w/w), based on the total weight of the polymer layer.

The aluminum oxide nanofibers can be prepared as described below in the method of preparing the reinforced silicone resin film of the present invention

In addition to a thermoplastic or thermoset polymer, at least one of the polymer layers of the reinforced silicone resin film can further comprise a fiber reinforcement.

The fiber reinforcement can be any reinforcement comprising fibers, provided the reinforcement has a high modulus and high tensile strength. The fiber reinforcement typically has a Young's modulus at 25°C of at least 3 GPa. For example, the reinforcement typically has a Young's modulus at 25°C of from 3 to 1,000 GPa, alternatively from 3 to 200 GPa, alternatively from 10 to 100 GPa. Moreover, the reinforcement typically has a tensile strength at 25°C of at least 50 MPa. For example, the reinforcement typically has a tensile strength at 25°C of from 50 to 10,000 MPa, alternatively from 50 to 1,000 MPa, alternatively from 50 to 500 MPa.

The fiber reinforcement can be a woven fabric, e.g., a cloth; a nonwoven fabric, e.g., a mat or roving; or loose (individual) fibers. The fibers in the reinforcement are typically cylindrical in shape and have a diameter of from 1 to 100 µm, alternatively from 1 to 20 µm, alternatively form 1 to 10 µm. Loose fibers may be continuous, meaning the fibers extend throughout the reinforced silicone resin film in a generally unbroken manner, or chopped.

The fiber reinforcement is typically heat-treated prior to use to remove organic contaminants. For example, the fiber reinforcement is typically heated in air at an elevated temperature, for example, 575 °C, for a suitable period of time, for example 2 h.

Examples of fiber reinforcements include, but are not limited to reinforcements comprising glass fibers; quartz fibers; graphite fibers; nylon fibers; polyester fibers; aramid fibers, such as Kevlar® and Nomex®; polyethylene fibers; polypropylene fibers; and silicon carbide fibers.

The concentration of the fiber reinforcement in the polymer layer is typically from 0.1 to 95% (w/w), alternatively from 5 to 75% (w/w), alternatively from 10 to 40% (w/w), based on the total weight of the polymer layer.

When one or more of the polymer layers of the reinforced silicone resin film comprise a mixture of aluminum oxide nanofibers and a fiber reinforcement, the concentration of the mixture is typically from 0.1 to 96% (w/w), alternatively from 5 to 75% (w/w), alternatively from 10 to 40% (w/w), based on the total weight of the polymer layer.

The polymer layer(s) of the reinforced silicone resin film can be prepared as described below in the method of preparing the reinforced silicone resin film of the present invention.

The reinforced silicone resin film can be prepared by a method comprising forming at least one polymer layer, wherein at least one of the polymer layers comprises a cured product of at least one silicone resin, and at least one of the polymer layers comprises aluminum oxide nanofibers, wherein the nanofibers comprise at least one aluminum oxide selected from γ-AlO(OH) and γ-Al₂O₃. The first polymer layer and any additional polymer layer(s) are as described and exemplified above for the reinforced silicone resin film.

In the method of preparing the reinforced silicone resin film, at least one polymer layer is formed. A first polymer layer can be formed using a variety of methods, including coating, extrusion, blow molding, co-extrusion, and biaxial stretching, depending on the composition of the polymer layer. For example, when the first polymer layer comprises a thermoplastic polymer (i.e., reinforced silicone resin film comprises at least two polymer layers), the layer can by formed by (i) coating a release liner with a composition comprising a thermoplastic polymer in a fluid state and (ii) converting the thermoplastic polymer of the coated release liner to a solid state.

In step (i) of the preceding method of forming the first polymer layer, a release liner is coated with a composition comprising a thermoplastic polymer in a fluid state.

The release liner can be any rigid or flexible material having a surface from which the first polymer layer can be removed without damage. Examples of release liners include, but are not limited to, silicon, quartz; fused quartz; aluminum oxide; ceramics; glass; metal foils; polyolefins such as polyethylene, polypropylene, polystyrene, and polyethyleneterephthalate; fluorocarbon polymers such as polytetrafluoroethylene and polyvinylfluoride; polyamides such as Nylon; polyimides; polyesters such as poly(methyl methacrylate); epoxy resins; polyethers; polycarbonates; polysulfones; and polyether sulfones. The release liner can also be a material, as exemplified above, having a surface treated with a release agent, such as a silicone release agent.

The composition comprising a thermoplastic polymer can be any composition comprising a thermoplastic polymer in a fluid (i.e., liquid) state. As used herein, the term "thermoplastic polymer in a fluid state" means the polymer is in a molten state or dissolved in an organic solvent. For example, the composition can comprise a thermoplastic polymer in a molten state above the melting point (Tₘ) or glass transition temperature (T_{g}) of the polymer, or the composition can comprise a thermoplastic polymer and an organic solvent.

The thermoplastic polymer of the composition is as described and exemplified above for the reinforced silicone resin film. The thermoplastic polymer can be a single thermoplastic polymer or a mixture (i.e., blend) comprising two or more different thermoplastic polymers. For example, the thermoplastic polymer can be a polyolefin blend.

The organic solvent can be any protic, aprotic, or dipolar aprotic organic solvent that does not react with the thermoplastic polymer and is miscible with the polymer. Examples of organic solvents include, but are not limited to, saturated aliphatic hydrocarbons such as n-pentane, hexane, n-heptane, isooctane and dodecane; cycloaliphatic hydrocarbons such as cyclopentane and cyclohexane; aromatic hydrocarbons such as benzene, toluene, xylene and mesitylene; cyclic ethers such as tetrahydrofuran (THF) and dioxane; ketones such as methyl isobutyl ketone (MIBK); halogenated alkanes such as trichloroethane; halogenated aromatic hydrocarbons such as bromobenzene and chlorobenzene; and alcohols such as methanol, ethanol, 1-propanol, 2-propanol, 1-butanol, 2- butanol, 2-methyl-1-butanol, 1,1-dimethyl-1-ethanol, pentanol, hexanol, cyclohexanol, hepatanol, and octanol.

The organic solvent can be a single organic solvent or a mixture comprising two or more different organic solvents, each as described and exemplified above.

The composition comprising a thermoplastic polymer can further comprise aluminum oxide nanofibers, described and exemplified above.

When the composition comprising a thermoplastic polymer comprises aluminum oxide nanofibers, the composition can be prepared by mixing an aluminum oxide dispersion comprising from 30 to 99.9% (w/w) of a solvent and from 0.1 to 70% (w/w) of aluminum oxide nanofibers suspended in the solvent, and the thermoplastic polymer in a fluid state, wherein the nanofibers comprise at least one aluminum oxide selected from γ-AlO(OH) and γ-Al₂O₃. The thermoplastic polymer is typically dissolved in an organic solvent.

The aluminum oxide dispersion comprises at least one solvent. The solvent can be water, an organic solvent, or a mixture of water and an organic solvent. The organic solvent can be any nonpolar or polar (protic, aprotic, or dipolar aprotic) solvent that does not react with the aluminum oxide nanofibers or adversely affect the stability of the dispersion. Furthermore, the organic solvent may be completely miscible, partially miscible, or immiscible with water.

Examples of solvents include, but are not limited to, saturated aliphatic hydrocarbons such as n-pentane, hexane, n-heptane, isooctane and dodecane; cycloaliphatic hydrocarbons such as cyclopentane and cyclohexane; aromatic hydrocarbons such as benzene, toluene, xylene and mesitylene; cyclic ethers such as tetrahydrofuran (THF) and dioxane; ketones such as methyl isobutyl ketone (MIBK); halogenated alkanes such as trichloroethane; halogenated aromatic hydrocarbons such as bromobenzene and chlorobenzene; alcohols such as methanol, ethanol, 1-propanol, 2-propanol, 1-butanol, 2-butanol, 2-methyl-1-butanol, 1,1-dimethyl-1-ethanol, pentanol, hexanol, cyclohexanol, hepatanol, and octanol; and water. Moreover, the solvent can be a single solvent or a mixture comprising two or more different solvents, each as described and exemplified above.

The concentration of the solvent is typically from 30 to 99.9% (w/w), alternatively from 50 to 99% (w/w), alternatively from 80 to 98% (w/w), based on the total weight of the aluminum oxide dispersion.

The aluminum oxide dispersion comprises aluminum oxide nanofibers suspended in the solvent, where the nanofibers are as described and exemplified above for the reinforced silicone resin film of the invention. As used herein, the term "suspended" means the nanofibers are distributed throughout the solvent in the absence of agitation at room temperature.

The concentration of the aluminum oxide nanofibers in the aluminum oxide dispersion is typically from 0.1 to 70% (w/w), alternatively from 0.5 to 50% (w/w), alternatively from 1 to 20% (w/w), based on the total weight of the dispersion. The weight of the nanofibers can be determined by heating a sample of the dispersion under atmospheric pressure at temperature of 150 °C for 1 h to remove the solvent.

The aluminum oxide nanofibers of the dispersion can be prepared as described below in the method of preparing the aluminum oxide dispersion of the present invention.

The aluminum oxide dispersion can comprise additional ingredients, provided the ingredient does not adversely affect the stability of the dispersion. Examples of additional ingredients include, but are not limited to, dispersing agents and carboxylic acids.

The aluminum oxide dispersion can further comprise at least one dispersing agent that promotes the formation of the dispersion, described below, and/or stabilizes the dispersion. Examples of dispersing agents include, but are not limited to, surfactants. The surfactant can be any anionic, cationic, nonionic, or zwitterionic surfactant typically employed to prepare and/or stabilize emulsions. Examples of anionic surfactants include, but are not limited to, alkyl carboxylates such as sodium and potassium stearate and sodium myristate; unsaturated carboxylates such as sodium oleate; ethoxy carboxylates; alkyl sulfates such as sodium dodecyl sulfate; alcohol ether sulfates such as sodium dodecyl 3-mole ether sulfate; alkyl aryl sulfonates such as sodium alkyl benzene sulfonates; naphthalene and alkyl naphthalene sulfonates; ethoxy sulfonates such as sodium nonyl phenol 2-mole ethoxylate ethane sulfonate; α-olefin sulfonates; sulfosuccinates such as sodium di(2-ethylhexyl)sulfosuccinate; alkyl phosphates; and alkyl ether phosphates.

Examples of cationic surfactants include, but are not limited to, alkyl trimethyl ammonium chlorides, dialkyl dimethyl ammonium chlorides, alkyl dimethyl benzyl ammonium chlorides; and polyethylene oxide modified cationic surfactants such as dodecyl methyl polyethylene oxide ammonium chloride.

Examples of nonionic surfactants include, but are not limited to, alcohol ethoxylates such as hexaoxyethylene glycol monoether, polyoxyethylene cetyl ether, polyoxyethylene lauryl ether, and polyoxyethylene stearyl ether; alkyl phenol ethoxylates; fatty acid ethoxylates such as glycerin monostearate and polyoxyethylene stearate; monoalkanolamide ethoxylates; sorbitan esters such as sorbitan monopalmitate and the surfactants sold under the name Span® (ICI); sorbitan ester ethoxylates such as polyoxyethylene sorbitan monolaurate and the surfactants sold under the name Tween® (ICI); amine ethoxylates; ethylene oxide-propylene oxide copolymers such as the surfactants sold under the names Pluronics (Wyandotte) and Synperonic PE (ICI); glycol esters; glycerol and polyglycerol esters; glucosides and polyglucosides; sucrose esters, and modified silicone oils containing polyoxyethylene groups.

Examples of zwitterionic surfactants include, but are not limited to, aminocarboxylic acids; N-allcyl betaines such as lauryl amido propyl dimethyl betaine; N-alkyl amino propionates; sulfobetaines; and N-alkyl amino dipropionates.

The concentration of the surfactant is typically from 0.1 to 20% (w/w), alternatively from 0.5 to 15% (w/w), alternatively from 1 to 5% (w/w), based on the total weight of the aluminum oxide dispersion.

As stated above, the aluminum oxide dispersion can further comprise at least one carboxylic acid. The carboxylic acid is as described and exemplified below in the method of preparing the aluminum oxide dispersion. The carboxylic acid can be a single carboxylic acid or a mixture comprising two or more different carboxylic acids.

The concentration of the carboxylic acid is typically from 0.1 to 40% (w/w), alternatively from 0.5 to 15% (w/w), alternatively from 2 to 10% (w/w), based on the total weight of the aluminum oxide dispersion.

The aluminum oxide dispersion can be prepared by (i) heating a mixture comprising aluminum oxide fibers comprising at least one aluminum oxide selected from γ-AlO(OH) and γ-Al₂O₃, water, and a carboxylic acid to produce a dispersion and a residue, wherein the dispersion comprises aluminum oxide nanofibers suspended in the water; and (ii) separating the dispersion from the residue.

In step (i) of the method of preparing the aluminum oxide dispersion, a mixture comprising aluminum oxide fibers comprising at least one aluminum oxide selected from γ-AlO(OH) and γ-Al₂O₃, water, and a carboxylic acid is heated to produce a dispersion and a residue, wherein the dispersion comprises aluminum oxide nanofibers suspended in the water.

The mixture comprises aluminum oxide fibers comprising from 0 to 100% (w/w) of γ-AlO(OH) and from 100 to 0% (w/w) of γ-Al₂O₃, alternatively from 30 to 99% (w/w) of γ-AlO(OH) and from 70 to 1% (w/w) of γ-Al₂O₃, alternatively from 40 to 60% (w/w) of γ AlO(OH) and from 60 to 40% (w/w) of γ-Al₂O₃, based on the total weight of the fibers. The composition of the aluminum oxide fibers can be determined using X-ray diffraction. Also, the sum of the percent by weight of γ-AlO(OH) and percent by weight of γ-Al₂O₃ is 100% (w/w).

As used herein, the term "aluminum oxide fibers" refers to aluminum oxide particles comprising fibers. The particles typically have a median particle size of from 0.1 to 400 µm, alternatively from 10 to 150 µm. Unlike the aluminum oxide nanofibers of the dispersion, described above, the aluminum oxide fibers will not remain suspended in a solvent without continuous agitation.

The aluminum oxide fibers of the present method can be prepared by heating aluminum hydroxide fibers comprising boehmite (γ-AlO(OH)), a mixture comprising boehmite and γ-Al₂O₃, or a mixture of boehmite and aluminum trihydroxide, Al(OH)₃, at a temperature of at least 450 °C. As used herein, the term "aluminum hydroxide fibers" refers to aluminum hydroxide particles comprising fibers. The particles typically have a median particle size of from 0.1 to 400 µm, alternatively from 10 to 150 µm.

The aluminum hydroxide fibers are typically heat at a temperature of from 450 to 800°C at atmospheric pressure for a sufficient time to convert any Al(OH)₃ to boehmite and, optionally, at least a portion of the boehmite to γ-Al₂O₃. Alternatively, the aluminum hydroxide fibers can be heated at a temperature of from 400 to 600 °C, alternatively from 450 to 550°C.

As the heating temperature increases in the range from 450 to 800 °C at a given time, the concentration of γ-Al₂O₃ in the aluminum oxide fibers increases. The heating time depends on the composition of the aluminum hydroxide fibers and the temperature. Typically, the aluminum hydroxide fibers are heated for 10 to 240 minutes at a temperature of from 450 to 800°C to produce aluminum oxide fibers containing from 0.01 to 95% (w/w) of γ-Al₂O₃. Aluminum oxide fibers comprising boehmite and γ-Al₂O₃ are also sold commercially under the name NanoCeram® gamma alumina fibers by Argonide Corporation (Sanford, FL).

The aluminum hydroxide fibers can be prepared using a variety of methods known in the art. For example, the aluminum hydroxide fibers can be prepared by the electroplosion of aluminum wire under air or nitrogen as described in U.S. Patent No. 6,838,005 B2; heating a carbonated, hydrated alumina gel with acetic or formic acid under autogenous pressure, as described in U.S. Patent No. 3,031,417; or heating an aqueous dispersion of alumina in the presence of a strong acid, as described in U.S. Patent No. 2,915,475. Aluminum hydroxide fibers comprising boehmite and Al(OH)₃ are also sold commercially under the name NanoCeram® boehmite fibers by Argonide Corporation (Sanford, FL).

The mixture comprises at least one carboxylic acid. The carboxylic acid is typically soluble in water or a mixture of water and a water-soluble alcohol. The carboxylic acid typically has from 1 to 6 carbon atoms. The carboxylic acid can be a monocarboxylic acid or a dicarboxylic acid.

Examples of carboxylic acids include, but are not limited to, monocarboxylic acids such as formic acid, acetic acid, trifluoroacetic acid, propionic acid; and dicarboxylic acids such as butyric acid, oxalic acid, malonic and, and succinic acid. The carboxylic acid can be a single carboxylic acid or a mixture comprising two or more different carboxylic acids, each as described above.

The mixture can further comprise at least one water-soluble alcohol, such as methanol, ethanol, and propanol.

The mixture can be heated in any standard reactor suitable for carrying out hydrolysis reactions under reflux conditions. Suitable reactors include glass and Teflon-lined glass reactors. Preferably, the reactor is equipped with a means of agitation, such as stirring. The mixture can be heated in air or an inert atmosphere, such as nitrogen or argon.

The aluminum oxide fibers, water, and carboxylic acid can be combined in any order. Typically,the aluminum oxide fibers are added to water with agitation, followed by the addition of acetic acid.

The concentration of water in the mixture is such that the ratio of the weight of water to the weight of aluminum oxide fibers is typically from 0.5 to 1000, alternatively from 5 to 500, alternatively from 20 to 100.

The concentration of the aluminum oxide fibers in the mixture is typically from 0.1 to 70% (w/w), alternatively from 1 to 50% (w/w), alternatively from 2 to 20% (w/w), based on the total weight of the mixture. The weight of the fibers can be determined by heating a sample of the mixture under atmospheric pressure at temperature of 150 °C for 1 h to remove the solvent.

The concentration of the carboxylic acid in the mixture is such that the ratio of the number of moles of carboxy groups (-CO₂H) in the acid to the number of moles of aluminum oxide fibers is typically from 0.1 to 20, alternatively from 0.5 to 10, alternatively from 1 to 5. As stated above, the aluminum oxide fibers comprise γ-AlO(OH) and γ-Al₂O₃. However, as used herein, the term "moles of aluminum oxide fibers" refers to the number of moles of aluminum oxide fibers, based on the simplified formula Al₂O₃.

The reaction is typically carried out at the boiling point of the mixture under reflux conditions at ambient pressure. When the temperature is less than the boiling point of the mixture, the rate of formation of the aluminum oxide dispersion is typically very slow.

The heating time depends on several factors, such as the mole ratio of carboxylic acid to aluminum oxide fibers, the weight ratio of water to aluminum oxide fibers, and the temperature. The time of reaction is typically from 1 to 164 h, alternatively from 10 to 48 h at a temperature equal to the boiling point of the mixture under ambient pressure. The optimum reaction time can be determined by routine experimentation using the methods set forth in the Examples section below.

In step (ii) of the method of preparing the aluminum oxide dispersion, the dispersion is separated from the residue. Examples of suitable methods include, but are not limited to, decanting, filtering, and centrifugation. For example, the dispersion can be separated from the residue by centrifuging the mixture at 2000 rpm (radius **=** 15.2 cm (6 in.)) for 30 minutes.

The method of preparing the aluminum oxide dispersion can further comprise, after step (ii), diluting the separated dispersion with an organic solvent or replacing at least a portion of the water in the separated dispersion with an organic solvent (water-soluble or water-insoluble). The latter can be carried out by adding an organic solvent to the separated dispersion to form a second mixture, and distilling the resulting second mixture to remove at least a portion of the water. Alternatively, the water can be replaced after removing the carboxylic acid from the separated dispersion, described below.

The organic solvent can be any aprotic or dipolar aprotic organic solvent that is completely miscible, partially miscible, or immiscible with water, and does not react with the aluminum oxide dispersion under the conditions of the present method. Preferably, the organic solvent forms a minimum boiling azeotrope with water. If the organic solvent does not form an azeotrope with water, the organic solvent preferably has a boiling point greater than the boiling point of water. Otherwise, the organic solvent may be completely removed during the distillation. The organic solvent is as described and exemplified above for the dispersion of the present invention. The organic solvent can be a single organic solvent or a mixture comprising two or more different organic solvents, each as defined above.

The method of preparing the aluminum oxide dispersion can further comprise, after step (ii), removing the carboxylic acid from the separated dispersion. The carboxylic acid can be removed from the dispersion using conventional methods such as treating the dispersion with an anion exchange resin and distillation. For example, the carboxylic acid can be removed from the dispersion by distilling the dispersion and periodically adding water to the dispersion to restore the original volume. Alternatively, the carboxylic acid can be removed from the dispersion after replacing at least a portion of the water with an organic solvent.

The method of preparing the aluminum oxide dispersion can further comprise treating the separated dispersion with an organosilicon compound to produce treated aluminum oxide nanofibers. The organosilicon compound can be any of the organosilicon compounds commonly used to treat silica fillers, with the exception of halosilanes. Examples of organosilicon compounds include, but are not limited to, organosiloxanes such as hydroxy-endblocked dimethylsiloxane oligomer, hexamethyldisiloxane, and tetramethyldivinyldisiloxane; organosilazanes such as hexamethyldisilazane, hexamethylcyclotrisilazane; and organoalkoxysilanes such as methyltrimethoxysilane, vinyltrimethoxysilane, vinyltriethoxysilane, 3-glycidoxypropyltrimethoxysilane, and 3-methacryloxypropyltrimethoxysilane. The organosilicon compound can be a single organosilicon compound or a mixture comprising two or more different organosilicon compounds, each as described above.

The concentration of the organosilicon compound is such that the ratio of the weight of the organosilicon compound to the weight of the aluminum oxide nanofibers is typically from 0.01 to 10, alternatively from 0.1 to 5, alternatively from 0.5 to 2. The weight of the aluminum oxide nanofibers refers to the dry weight of the nanofibers obtained after heating a sample of the dispersion under atmospheric pressure at 150 °C for 1 h.

The separated dispersion containing the aluminum oxide nanofibers can be treated with the organosilicon compound by mixing the dispersion and the organosilicon compound at a moderate temperature. For example, the aforementioned components are typically mixed at a temperature of from 0 to 90 °C for a period of from 0.5 to 24 h.

Alternatively, the separated dispersion containing the aluminum oxide nanofibers can be treated with the organosilicon compound by mixing the aluminum oxide dispersion, the organosilicon compound, and a water-immiscible organic solvent, to produce an organic phase comprising the nanofibers and an aqueous phase; and separating the organic phase from the aqueous phase. The organic phase containing the aluminum oxide nanofibers can be separated from the aqueous phase by discontinuing agitation of the mixture, allowing the mixture to separate into two layers, and removing the aqueous or organic layer. Alternatively, the organic phase containing the aluminum oxide nanofibers can be separated from the aqueous phase by distilling the mixture to remove the water or the organic solvent.

The method of preparing the aluminum oxide dispersion can further comprise treating the separated dispersion with a dispersing agent. The dispersing agent is as described and exemplified above for the dispersion of the present invention. Alternatively, the dispersion can be treated with the dispersing agent after replacing at least a portion of the water and/or removing the carboxylic acid, described above.

The release liner can be coated with the composition comprising a thermoplastic polymer in a fluid state using conventional coating techniques, such as spin coating, dipping, spraying, brushing, extrusion, or screen-printing. The amount of the composition is sufficient to form a first polymer layer having a thickness of from 0.01 to 1000 µm.

In step (ii) of the preceding method, the thermoplastic polymer of the coated release liner is converted to a solid state. When the composition used to coat the release liner comprises a thermoplastic polymer in a molten state, the thermoplastic polymer can be converted to a solid state by allowing the polymer to cool to a temperature below the liquid-solid transition temperature (T_{g} or Tₘ), for example, room temperature. When the composition used to coat the release liner comprises a thermoplastic polymer and an organic solvent, the thermoplastic polymer can be converted to a solid state by removing at least a portion of the solvent. The organic solvent can be removed by allowing the solvent to evaporate at ambient temperature or by heating the coating to a moderate temperature, for example, below the solid-liquid transition temperature of the polymer.

The method of forming the first polymer layer, wherein the layer comprises a thermoplastic polymer, can further comprise, after step (i) and before step (ii), applying a second release liner to the coated release liner of the first step to form an assembly, and compressing the assembly. The assembly can be compressed to remove excess composition and/or entrapped air, and to reduce the thickness of the coating. The assembly can be compressed using conventional equipment such as a stainless steel roller, hydraulic press, rubber roller, or laminating roll set. The assembly is typically compressed at a pressure of from 1,000 Pa to 10 MPa and at a temperature of from room temperature (~23 ± 2°C) to 200 °C.

The method of forming the first polymer layer, wherein the layer comprises a thermoplastic polymer, can further comprise repeating the steps (i) and (ii) to increase the thickness of the polymer layer, provided the same composition is used for each coating step.

When the first polymer layer comprises a thermoset (i.e., cross-linked) polymer, the layer can be formed by (i) coating a release liner with a curable composition comprising a thermosetting polymer and (ii) curing the thermosetting polymer of the coated release liner.

In step (i) of the immediately preceding method of forming the first polymer layer, a release liner, described above, is coated with a curable composition comprising a thermosetting polymer.

The curable composition comprising a thermosetting polymer can be any curable composition containing a thermosetting polymer. As used herein and below, the term "thermosetting polymer" refers to a polymer having the property of becoming permanently rigid (nonflowable) when cured (i.e., cross-linked). The curable composition typically contains a thermosetting polymer and additional ingredients, such as an organic solvent, cross-linking agent, and/or catalyst.

Examples of curable compositions comprising thermosetting polymers include, but are not limited to, curable silicone compositions, such as hydrosilylation-curable silicone compositions, condensation-curable silicone compositions, and peroxide-curable silicone compositions; curable polyolefin compositions such as polyethylene and polypropylene compositions; curable polyamide compositions; curable epoxy resin compositions; curable amino resin compositions; curable polyurethane compositions; curable polyimide compositions; curable polyester compositions; and curable acrylic resin compositions.

The curable silicone composition can be any curable silicone composition comprising at least one silicone resin. Curable silicone compositions and methods for their preparation are well known in the art. Examples of curable silicone compositions include, but are not limited to, hydrosilylation-curable silicone compositions, condensation-curable silicone compositions, radiation-curable silicone compositions, and peroxide-curable silicone compositions.

The silicone resin of the curable silicone composition can contain T siloxane units, T and Q siloxane units, or T and/or Q siloxane units in combination with M and/or D siloxane units. For example, the silicone resin can be a T resin, a TQ resin, an MT resin, a DT resin, an MDT resin, an MQ resin, a DQ resin, an MDQ resin, an MTQ resin, a DTQ resin, or an MDTQ resin.

The silicone resin typically contains silicon-bonded reactive groups capable of reacting in the presence or absence of a catalyst to form a cured product of the silicone resin. Examples of silicon-bonded reactive groups include, but are not limited to, -H, alkenyl, alkynyl, -OH, a hydrolysable group, alkenyl ether, acryloyloxyalkyl, substituted acryloyloxyalkyl, and an epoxy-substituted organic group.

The silicone resin typically has a weight-average molecular weight (M_{w}) of from 500 to 1,000,000, alternatively from 1,000 to 100,000, alternatively from 1,000 to 50,000, alternatively from 1,000 to 20,000, alternatively form 1,000 to 10,000, where the molecular weight is determined by gel permeation chromatography employing a refractive index detector and polystyrene standards.

A hydrosilylation-curable silicone composition typically comprises a silicone resin having an average of at least two silicon-bonded alkenyl groups or silicon-bonded hydrogen atoms per molecule; an organosilicon compound in an amount sufficient to cure the silicone resin, wherein the organosilicon compound has an average of at least two silicon-bonded hydrogen atoms or silicon-bonded alkenyl groups per molecule capable of reacting with the silicon-bonded alkenyl groups or silicon-bonded hydrogen atoms in the silicone resin; and a catalytic amount of a hydrosilylation catalyst.

According to a first embodiment, the hydrosilylation-curable silicone composition comprises (A) a silicone resin having the formula (R¹R²₂SiO_{1/2})_{w}(R²₂SiO_{2/2})ₓ (R²SiO_{3/2})y(SiO_{4/2})_{z} (I), wherein each R¹is independently C₁ to C₁₀ hydrocarbyl or C₁ to C₁₀ halogen-substituted hydrocarbyl, both free of aliphatic unsaturation, each R² is independently R¹ or alkenyl, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded alkenyl groups per molecule; (B) an organosilicon compound having an average of at least two silicon-bonded hydrogen atoms per molecule in an amount sufficient to cure the silicone resin; and (C) a catalytic amount of a hydrosilylation catalyst.

Component (A) is at least one silicone resin having the formula (R¹R²₂SiO_{1/2})_{w} (R²₂SiO_{2/2})ₓ (R²SiO_{3/2})_{y}(SiO_{4/2})_{z} (I), wherein each R¹is independently C₁ to C₁₀ hydrocarbyl or C₁ to C₁₀ halogen-substituted hydrocarbyl, both free of aliphatic unsaturation, each R² is independently R¹ or alkenyl, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded alkenyl groups per molecule.

The hydrocarbyl and halogen-substituted hydrocarbyl groups represented by R¹ are free of aliphatic unsaturation and typically have from 1 to 10 carbon atoms, alternatively from 1 to 6 carbon atoms. Acyclic hydrocarbyl and halogen-substituted hydrocarbyl groups containing at least 3 carbon atoms can have a branched or unbranched structure. Examples of hydrocarbyl groups represented by R¹ include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, and decyl; cycloalkyl, such as cyclopentyl, cyclohexyl, and methylcyclohexyl; aryl, such as phenyl and naphthyl; alkaryl, such as tolyl and xylyl; and aralkyl, such as benzyl and phenethyl. Examples of halogen-substituted hydrocarbyl groups represented by R¹ include, but are not limited to, 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl.

The alkenyl groups represented by R², which may be the same or different, typically have from 2 to about 10 carbon atoms, alternatively from 2 to 6 carbon atoms, and are exemplified by, but not limited to, vinyl, allyl, butenyl, hexenyl, and octenyl.

In the formula (I) of the silicone resin, the subscripts w, x, y, and z are mole fractions. The subscript w typically has a value of from 0 to 0.95, alternatively from 0 to 0.8, alternatively from 0 to 0.2; the subscript x typically has a value of from 0 to 0.95, alternatively from 0 to 0.8, alternatively from 0 to 0.5; the subscript y typically has a value of from 0 to 1, alternatively from 0.3 to 1, alternatively from 0.5 to 1; the subscript z typically has a value of from 0 to 0.9, alternatively from 0 to 0.5, alternatively from 0 to 0.1; and the sum y+z typically has value of from 0.1 to 1, alternatively from 0.2 to 1, alternatively from 0.5 to 1, alternatively 0.8 to 1.

Typically at least 50 mol%, alternatively at least 65 mol%, alternatively at least 80 mol% of the groups R² in the silicone resin are alkenyl. The term "mol% of the groups R² in the silicone resin are alkenyl" is defined as the ratio of the number of moles of silicon-bonded alkenyl groups in the silicone resin to the total number of moles of the groups R² in the resin, multiplied by 100.

The silicone resin typically contains less than 10% (w/w), alternatively less than 5% (w/w), alternatively less than 2% (w/w), of silicon-bonded hydroxy groups, as determined by 29_{Si} NMR.

Examples of silicone resins suitable for use as component (A) include, but are not limited to, resins having the following formulae:
(Vi₂MeSiO_{1/2})_{0.25}(PhSi0_{3/2})_{0.75}, (ViMe₂SiO_{1/2})_{0.25}(PhSiO_{3/2})_{0.75}, (ViMe₂SiO_{1/2})_{0.25}(MeSiO_{3/2})_{0.25}(PhSiO_{3/2})_{0.50}, (ViMe₂SiO_{1/2})_{0.15}(PhSiO_{3/2})_{0.75} (SiO_{4/2})_{0.1}, and (Vi₂MeSiO1_{/2})_{0.15}(ViMe₂SiO_{1/2})_{0.1}(PhSiO_{3/2})_{0.75}, where Me is methyl, Vi is vinyl, Ph is phenyl, and the numerical subscripts outside the parenthesis denote mole fractions. Also, in the preceding formulae, the sequence of units is unspecified.

Component (A) can be a single silicone resin or a mixture comprising two or more different silicone resins, each as described above.

Methods of preparing silicone resins containing silicon-bonded alkenyl groups are well known in the art; many of these resins are commercially available. These resins are typically prepared by cohydrolyzing the appropriate mixture of chlorosilane precursors in an organic solvent, such as toluene. For example, a silicone resin consisting essentially of R¹R²₂SiO_{1/2} units and R²SiO_{3/2} units can be prepared by cohydrolyzing a compound having the formula R¹R²₂SiCl and a compound having the formula R²SiCl₃ in toluene, where R¹ and R² are as defined and exemplified above. The aqueous hydrochloric acid and silicone hydrolyzate are separated and the hydrolyzate is washed with water to remove residual acid and heated in the presence of a mild condensation catalyst to "body" the resin to the requisite viscosity. If desired, the resin can be further treated with a condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, NHCOCH₃, and -SCH₃, can be utilized as starting materials in the cohydrolysis reaction. The properties of the resin products depend on the types of silanes, the mole ratio of silanes, the degree of condensation, and the processing conditions.

Component (B) is at least one organosilicon compound having an average of at least two silicon-bonded hydrogen atoms per molecule in an amount sufficient to cure the silicone resin of component (A).

The organosilicon compound has an average of at least two silicon-bonded hydrogen atoms per molecule, alternatively at least three silicon-bonded hydrogen atoms per molecule. It is generally understood that cross-linking occurs when the sum of the average number of alkenyl groups per molecule in component (A) and the average number of silicon-bonded hydrogen atoms per molecule in component (B) is greater than four.

The organosilicon compound can be an organohydrogensilane or an organohydrogensiloxane. The organohydrogensilane can be a monosilane, disilane, trisilane, or polysilane. Similarly, the organohydrogensiloxane can be a disiloxane, trisiloxane, or polysiloxane. The structure of the organosilicon compound can be linear, branched, cyclic, or resinous. Cyclosilanes and cyclosiloxanes typically have from 3 to 12 silicon atoms, alternatively from 3 to 10 silicon atoms, alternatively from 3 to 4 silicon atoms. In acyclic polysilanes and polysiloxanes, the silicon-bonded hydrogen atoms can be located at terminal, pendant, or at both terminal and pendant positions.

Examples of organohydrogensilanes include, but are not limited to, diphenylsilane, 2-chloroethylsilane, bis[(p-dimethylsilyl)phenyl]ether, 1,4-dimethyldisilylethane, 1,4-bis(dimethylsilyl)benzene, 1,3,5-tris(dimethylsilyl)benzene, 1,3,5-trimethyl-1,3,5-trisilane, poly(methylsilylene)phenylene, and poly(methylsilylene)methylene.

Examples of organohydrogensiloxanes include, but are not limited to, 1,1,3,3-tetramethyldisiloxane, 1,1,3,3-tetraphenyldisiloxane, phenyltris(dimethylsiloxy)silane, 1,3,5-trimethylcyclotrisiloxane, a trimethylsiloxy-terminated poly(methylhydrogensiloxane), a trimethylsiloxy-terminated poly(dimethylsiloxane/methylhydrogensiloxane), a dimethylhydrogensiloxy-terminated poly(methylhydrogensiloxane), and a resin consisting essentially of HMe₂SiO_{1/2} units, Me₃SiO_{1/2} units, and SiO_{4/2} units, wherein Me is methyl.

Component (C) of the hydrosilylation-curable silicone composition is at least one hydrosilylation catalyst that promotes the addition reaction of component (A) with component (B). The hydrosilylation catalyst can be any of the well-known hydrosilylation catalysts comprising a platinum group metal, a compound containing a platinum group metal, or a microencapsulated platinum group metal-containing catalyst. Platinum group metals include platinum, rhodium, ruthenium, palladium, osmium and iridium. Preferably, the platinum group metal is platinum, based on its high activity in hydrosilylation reactions.

Preferred hydrosilylation catalysts include the complexes of chloroplatinic acid and certain vinyl-containing organosiloxanes disclosed by Willing in U.S. Pat. No. 3,419,593. A preferred catalyst of this type is the reaction product of chloroplatinic acid and 1,3-diethenyl-1,1,3,3-tetramethyldisiloxane.

The hydrosilylation catalyst can also be a microencapsulated platinum group metal-containing catalyst comprising a platinum group metal encapsulated in a thermoplastic resin. Compositions containing microencapsulated hydrosilylation catalysts are stable for extended periods of time, typically several months or longer, under ambient conditions, yet cure relatively rapidly at temperatures above the melting or softening point of the thermoplastic resin(s). Microencapsulated hydrosilylation catalysts and methods of preparing them are well known in the art, as exemplified in U.S. Pat. No. 4,766,176 and the references cited therein; and U.S. Pat. No. 5,017,654.

Component (C) can be a single hydrosilylation catalyst or a mixture comprising two or more different catalysts that differ in at least one property, such as structure, form, platinum group metal, complexing ligand, and thermoplastic resin.

The concentration of component (C) is sufficient to catalyze the addition reaction of component (A) with component (B). Typically, the concentration of component (C) is sufficient to provide from 0.1 to 1000 ppm of a platinum group metal, preferably from 1 to 500 ppm of a platinum group metal, and more preferably from 5 to 150 ppm of a platinum group metal, based on the combined weight of components (A) and (B). The rate of cure is very slow below 0.1 ppm of platinum group metal. The use of more than 1000 ppm of platinum group metal results in no appreciable increase in cure rate, and is therefore uneconomical.

According to a second embodiment, the hydrosilylaton-curable silicone composition comprises (A') a silicone resin having the formula (R¹R³₂SiO_{1/2})_{w}(R³₂SiO_{2/2})ₓ (R³SiO_{3/2})_{y}(SiO_{4/2})_{z} (II), wherein each R¹is independently C₁ to C₁₀ hydrocarbyl or C₁ to C₁₀ halogen-substituted hydrocarbyl, both free of aliphatic unsaturation, each R³ is independently R¹ or -H, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded hydrogen atoms per molecule; (B') an organosilicon compound having an average of at least two silicon-bonded alkenyl groups per molecule in an amount sufficient to cure the silicone resin; and (C) a catalytic amount of a hydrosilylation catalyst.

Component (A') is at least one silicone resin having the formula (R¹R³₂SiO_{1/2})_{w} (R³₂SiO_{2/2})ₓ(R³SiO_{3/2})_{y}(SiO_{4/2})_{z} (II), wherein each R¹is independently C₁ to C₁₀ hydrocarbyl or C₁ to C₁₀ halogen-substituted hydrocarbyl, both free of aliphatic unsaturation, each R³ is independently R¹ or -H, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded hydrogen atoms per molecule. In the formula (II), R¹, w, x, y, z, and y+z are as described and exemplified above for the silicone resin having the formula (I).

Typically at least 50 mol%, alternatively at least 65 mol%, alternatively at least 80 mol% of the groups R³ in the silicone resin are hydrogen. The term "mol% of the groups R³ in the silicone resin are hydrogen" is defined as the ratio of the number of moles of silicon-bonded hydrogen atoms in the silicone resin to the total number of moles of the groups R³ in the resin, multiplied by 100.

The silicone resin typically contains less than 10% (w/w), alternatively less than 5% (w/w), alternatively less than 2% (w/w), of silicon-bonded hydroxy groups, as determined by ²⁹Si NMR.

Examples of silicone resins suitable for use as component (A') include, but are not limited to, resins having the following formulae:
(HMe₂SiO_{1/2})_{0.25}(PhSiO_{3/2})_{0.75}, (HMeSiO_{2/2})_{0.3}(PhSiO_{3/2})_{0.6}(MeSiO_{3/2})_{0.1}, and
(Me₃SiO_{1/2})_{0.1}(H₂SiO_{2/2})_{0.1}(MeSiO_{3/2})_{0.4}(PhSiO_{3/2})_{0.4}, where Me is methyl, Ph is phenyl, and the numerical subscripts outside the parenthesis denote mole fractions. Also, in the preceding formulae, the sequence of units is unspecified.

Component (A') can be a single silicone resin or a mixture comprising two or more different silicone resins, each as described above.

Methods of preparing silicone resins containing silicon-bonded hydrogen atoms are well known in the art; many of these resins are commercially available. Silicone resins are typically prepared by cohydrolyzing the appropriate mixture of chlorosilane precursors in an organic solvent, such as toluene. For example, a silicone resin consisting essentially of R¹R³₂SiO_{1/2} units and R³SiO_{3/2} units can be prepared by cohydrolyzing a compound having the formula R¹R³₂SiCl and a compound having the formula R³SiCl₃ in toluene, where R¹ and R³ are as described and exemplified above. The aqueous hydrochloric acid and silicone hydrolyzate are separated and the hydrolyzate is washed with water to remove residual acid and heated in the presence of a mild non-basic condensation catalyst to "body" the resin to the requisite viscosity. If desired, the resin can be further treated with a non-basic condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, NHCOCH₃, and -SCH₃, can be utilized as starting materials in the cohydrolysis reaction. The properties of the resin products depend on the types of silanes, the mole ratio of silanes, the degree of condensation, and the processing conditions.

Component (B') is at least one organosilicon compound having an average of at least two silicon-bonded alkenyl groups per molecule in an amount sufficient to cure the silicone resin of component (A').

The organosilicon compound contains an average of at least two silicon-bonded alkenyl groups per molecule, alternatively at least three silicon-bonded alkenyl groups per molecule. It is generally understood that cross-linking occurs when the sum of the average number of silicon-bonded hydrogen atoms per molecule in component (A') and the average number of silicon-bonded alkenyl groups per molecule in component (B') is greater than four.

The organosilicon compound can be an organosilane or an organosiloxane. The organosilane can be a monosilane, disilane, trisilane, or polysilane. Similarly, the organosiloxane can be a disiloxane, trisiloxane, or polysiloxane. The structure of the organosilicon compound can be linear, branched, cyclic, or resinous. Cyclosilanes and cyclosiloxanes typically have from 3 to 12 silicon atoms, alternatively from 3 to 10 silicon atoms, alternatively from 3 to 5 silicon atoms. In acyclic polysilanes and polysiloxanes, the silicon-bonded alkenyl groups can be located at terminal, pendant, or at both terminal and pendant positions.

Examples of organosilanes suitable for use as component (B') include, but are not limited to, silanes having the following formulae: Vi₄Si, PhSiVi₃, MeSiVi₃, PhMeSiVi₂, Ph₂SiVi₂, and PhSi(CH₂CH=CH₂)₃, where Me is methyl, Ph is phenyl, and Vi is vinyl.

Examples of organosiloxanes suitable for use as component (B') include, but are not limited to, siloxanes having the following formulae:
PhSi(OSiMe₂Vi)₃, Si(OSiMe₂Vi)₄, MeSi(OSiMe₂Vi)₃, and Ph₂Si(OSiMe₂Vi)₂, where Me is methyl, Ph is phenyl, and Vi is vinyl.

Component (B') can be a single organosilicon compound or a mixture comprising two or more different organosilicon compounds, each as described above. For example component (B') can be a single organosilane, a mixture of two different organosilanes, a single organosiloxane, a mixture of two different organosiloxanes, or a mixture of an organosilane and an organosiloxane.

The concentration of component (B') is sufficient to cure (cross-link) the silicone resin of component (A'). The exact amount of component (B') depends on the desired extent of cure, which generally increases as the ratio of the number of moles of silicon-bonded alkenyl groups in component (B') to the number of moles of silicon-bonded hydrogen atoms in component (A') increases. The concentration of component (B') is typically sufficient to provide from 0.4 to 2 moles of silicon-bonded alkenyl groups, alternatively from 0.8 to 1.5 moles of silicon-bonded alkenyl groups, alternatively from 0.9 to 1.1 moles of silicon-bonded alkenyl groups, per mole of silicon-bonded hydrogen atoms in component (A').

Methods of preparing organosilanes and organosiloxanes containing silicon-bonded alkenyl groups are well known in the art; many of these compounds are commercially available.

Component (C) of the second embodiment of the hydrosilylation-curable silicone composition is as described and exemplified above for component (C) of the first embodiment.

The hydrosilylation-curable silicone composition of the present method can comprise additional ingredients, provided the ingredient does not prevent the silicone composition from curing to form the first interfacial coating, described above, of the electronic package. Examples of additional ingredients include, but are not limited to, hydrosilylation catalyst inhibitors, such as 3-methyl-3-penten-1-yne, 3,5-dimethyl-3-hexen-1-yne, 3,5-dimethyl-1-hexyn-3-ol, 1-ethynyl-1-cyclohexanol, 2-phenyl-3-butyn-2-ol, vinylcyclosiloxanes, and triphenylphosphine; adhesion promoters, such as the adhesion promoters taught in U.S. Patent Nos. 4,087,585 and 5,194,649; dyes; pigments; anti-oxidants; heat stabilizers; UV stabilizers; flame retardants; flow control additives; and diluents, such as organic solvents and reactive diluents.

The condensation-curable silicone composition typically comprises a silicone resin having an average of at least two silicon-bonded hydrogen atoms, hydroxy groups, or hydrolysable groups per molecule and, optionally, a cross-linking agent having silicon-bonded hydrolysable groups and/or a condensation catalyst.

According to one embodiment, the condensation-curable silicone composition comprises a silicone resin having the formula (R⁴R⁵₂SiO_{1/2})_{w}(R⁵₂SiO_{2/2})ₓ (R⁵SiO_{3/2})_{y}(SiO_{4/2})_{z} (III), wherein each R⁴ is independently C₁ to C₁₀ hydrocarbyl or C₁ to C₁₀ halogen-substituted hydrocarbyl, each R⁵ is independently R⁴, -H, -OH, or a hydrolysable group, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded hydrogen atoms, hydroxy groups, or hydrolysable groups per molecule. In the formula (III), w, x, y, z, and y+z are as described and exemplified above for the silicone resin having the formula (I).

The hydrocarbyl and halogen-substituted hydrocarbyl groups represented by R⁴ typically have from 1 to 10 carbon atoms, alternatively from 1 to 6 carbon atoms, alternatively from 1 to 4 carbon atoms. Acyclic hydrocarbyl and halogen-substituted hydrocarbyl groups containing at least 3 carbon atoms can have a branched or unbranched structure. Examples of hydrocarbyl groups include, but are not limited to, alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, octyl, nonyl, and decyl; cycloalkyl, such as cyclopentyl, cyclohexyl, and methylcyclohexyl; aryl, such as phenyl and naphthyl; alkaryl, such as tolyl and xylyl; aralkyl, such as benzyl and phenethyl; alkenyl, such as vinyl, allyl, and propenyl; arylalkenyl, such as styryl and cinnamyl; and alkynyl, such as ethynyl and propynyl. Examples of halogen-substituted hydrocarbyl groups include, but are not limited to, 3,3,3-trifluoropropyl, 3-chloropropyl, chlorophenyl, dichlorophenyl, 2,2,2-trifluoroethyl, 2,2,3,3-tetrafluoropropyl, and 2,2,3,3,4,4,5,5-octafluoropentyl.

As used herein the term "hydrolysable group" means the silicon-bonded group reacts with water in either the presence or absence of a catalyst at any temperature from room temperature (~23 ± 2 °C) to 100 °C within several minutes, for example thirty minutes, to form a silanol (Si-OH) group. Examples of hydrolysable groups represented by R⁵ include, but are not limited to, -Cl, -Br, -OR⁶, -OCH₂CH₂OR⁶, CH₃C(=O)O-, Et(Me)C=N-O-, CH₃C(=O)N(CH₃)-, and -ONH₂, wherein R⁶ is C₁ to C₈ hydrocarbyl or C₁ to C₈ halogen-substituted hydrocarbyl.

The hydrocarbyl and halogen-substituted hydrocarbyl groups represented by R⁶ typically have from 1 to 8 carbon atoms, alternatively from 3 to 6 carbon atoms. Acyclic hydrocarbyl and halogen-substituted hydrocarbyl groups containing at least 3 carbon atoms can have a branched or unbranched structure. Examples of hydrocarbyl include, but are not limited to, unbranched and branched alkyl, such as methyl, ethyl, propyl, 1-methylethyl, butyl, 1-methylpropyl, 2-methylpropyl, 1,1-dimethylethyl, pentyl, 1-methylbutyl, 1-ethylpropyl, 2-methylbutyl, 3-methylbutyl, 1,2-dimethylpropyl, 2,2-dimethylpropyl, hexyl, heptyl, and octyl; cycloalkyl, such as cyclopentyl, cyclohexyl, and methylcyclohexyl; phenyl; alkaryl, such as tolyl and xylyl; aralkyl, such as benzyl and phenethyl; alkenyl, such as vinyl, allyl, and propenyl; arylalkenyl, such as styryl; and alkynyl, such as ethynyl and propynyl. Examples of halogen-substituted hydrocarbyl groups include, but are not limited to, 3,3,3-trifluoropropyl, 3- chloropropyl, chlorophenyl, and dichlorophenyl.

Typically, at least 2 mol%, alternatively at least 10 mol%, alternatively at least 30 mol% of the groups R⁵ in the silicone resin are hydrogen, hydroxy, or a hydrolysable group. The term "mol% of the groups R⁵ in the silicone resin are in the silicone resin are hydrogen, hydroxy, or a hydrolysable group" is defined as the ratio of the number of moles of silicon-bonded hydrogen, hydroxy, or a hydrolysable groups in the silicone resin to the total number of moles of the groups R⁵ in the resin, multiplied by 100.

Examples of silicone resins having the formula (III) include, but are not limited to, resins having the following formulae:
(MeSiO_{3/2})ₙ, (PhSiO_{3/2})ₙ, (Me₃SiO_{1/2})_{0.8}(SiO_{4/2})_{0.2}, (MeSiO_{3/2})_{0.67}(PhSiO_{3/2})_{0.33},
(MeSiO_{3/2})_{0.45} (PhSi_{03/2})_{0.40}(ph₂SiO_{2/2})_{0.1}(PhMeSiO_{2/2})_{0.05},
(PhSiO_{3/2})_{0.4}(MeSiO_{3/2})_{0.45}(PhSiO_{3/2})_{0.1}(PhMeSiO_{2/2})_{0.05}, and
(PhSi0_{3/2})_{0.4}(MeSiO_{3/2})_{0.1}(PhMeSiO_{2/2})_{0.5}, where Me is methyl, Ph is phenyl, the numerical subscripts outside the parenthesis denote mole fractions, and the subscript n has a value such that the silicone resin has a weight-average molecular weight of from 500 to 1,000,000. Also, in the preceding formulae, the sequence of units is unspecified.

The condensation-curable silicone composition can comprise a single silicone resin or a mixture comprising two or more different silicone resins, each as described above.

Methods of preparing silicone resins containing silicon-bonded hydrogen atoms, hydroxy groups, or hydrolysable groups are well known in the art; many of these resins are commercially available. Silicone resins are typically prepared by cohydrolyzing the appropriate mixture of silane precursors in an organic solvent, such as toluene. For example, a silicone resin can be prepared by cohydrolyzing a silane having the formula R⁴R⁵₂SiX and a silane having the formula R⁵SiX₃ in toluene, where R⁴ is C₁ to C₁₀ hydrocarbyl or C₁ to C₁₀ halogen-substituted hydrocarby, R⁵ is R⁴, -H, or a hydrolysable group, and X is a hydrolysable group, provided when R⁵ is a hydrolysable group, X is more reactive in the hydrolysis reaction than R⁵. The aqueous hydrochloric acid and silicone hydrolyzate are separated and the hydrolyzate is washed with water to remove residual acid and heated in the presence of a mild condensation catalyst to "body" (i.e., condense) the resin to the requisite viscosity. If desired, the resin can be further treated with a condensation catalyst in an organic solvent to reduce the content of silicon-bonded hydroxy groups.

The condensation-curable silicone composition can comprise additional ingredients, provided the ingredient does not prevent the silicone resin from curing to form the first interfacial coating, described above, of the electronic package. Examples of additional ingredients include, but are not limited to, adhesion promoters; dyes; pigments; anti-oxidants; heat stabilizers; UV stabilizers; flame retardants; flow control additives; organic solvents, cross-linking agents, and condensation catalysts.

For example the condensation-curable silicone composition can further comprises a cross-linking agent and/or a condensation catalyst. The cross-linking agent can have the formula R⁶_{q}SiX_{4-q}, wherein R⁶ is C₁, to C₈ hydrocarbyl or C₁ to C₈ halogen-substituted hydrocarbyl, X is a hydrolysable group, and q is 0 or 1. The hydrocarbyl and halogen-substituted hydrocarbyl groups represented by R⁶ are as described and exemplified above. Also, the hydrolysable groups represented by X are as described and exemplified above for R⁵.

Examples of cross-linking agents include, but are not limited to, alkoxy silanes such as MeSi(OCH₃)₃, CH₃Si(OCH₂CH₃)₃, CH₃Si(OCH₂CH₂CH₃)₃, CH₃Si[O(CH₂)₃CH₃]₃, CH₃CH₂Si(OCH₂CH₃)₃, C₆H₅Si(OCH₃)₃, C₆H₅CH₂Si(OCH₃)₃, C₆H₅Si(OCH₂CH₃)₃, CH₂=CHSi(OCH₃)₃, CH₂=CHCH₂Si(OCH₃)₃, CF₃CH₂CH₂Si(OCH₃)₃, CH₃Si(OCH₂CH₂OCH₃)₃, CF₃CH₂CH₂Si(OCH₂CH₂OCH₃)₃, CH₂=CHSi(OCH₂CH₂OCH₃)₃, CH₂=CHCH₂Si(OCH₂CH₂OCH₃)₃, C₆H₅Si(OCH₂CH₂OCH₃)₃, Si(OCH₃)₄, Si(OC₂H₅)₄, and Si(OC₃H₇)₄; organoacetoxysilanes such as CH₃Si(OCOCH₃)₃, CH₃CH₂Si(OCOCH₃)₃, and CH₂=CHSi(OCOCH₃)₃; organoiminooxysilanes such as CH₃Si[O-N=C(CH₃)CH₂CH₃]₃, Si[O-N=C(CH₃)CH₂CH₃]₄, and CH₂=CHSi[O-N=C(CH₃)CH₂CH₃]₃; organoacetamidosilanes such as CH₃Si[NHC(=O)CH₃]₃ and C₆H₅Si[NHC(=O)CH₃]₃; amino silanes such as CH₃Si[NH(s-C₄H₉)]₃ and CH₃Si(NHC₆H₁₁)₃; and organoaminooxysilanes.

The cross-linking agent can be a single silane or a mixture of two or more different silanes, each as described above. Also, methods of preparing tri- and tetra-functional silanes are well known in the art; many of these silanes are commercially available.

When present, the concentration of the cross-linking agent in the silicone composition is sufficient to cure (cross-link) the silicone resin. The exact amount of the cross-linking agent depends on the desired extent of cure, which generally increases as the ratio of the number of moles of silicon-bonded hydrolysable groups in the cross-linking agent to the number of moles of silicon-bonded hydrogen atoms, hydroxy groups, or hydrolysable groups in the silicone resin increases. Typically, the concentration of the cross-linking agent is sufficient to provide from 0.2 to 4 moles of silicon-bonded hydrolysable groups per mole of silicon-bonded hydrogen atoms, hydroxy groups, or hydrolysable groups in the silicone resin. The optimum amount of the cross-linking agent can be readily determined by routine experimentation.

As stated above, the condensation-curable silicone composition can further comprise at least one condensation catalyst. The condensation catalyst can be any condensation catalyst typically used to promote condensation of silicon-bonded hydroxy (silanol) groups to form Si-O-Si linkages. Examples of condensation catalysts include, but are not limited to, amines; and complexes of lead, tin, zinc, and iron with carboxylic acids. In particular, the condensation catalyst can be selected from tin(II) and tin(IV) compounds such as tin dilaurate, tin dioctoate, and tetrabutyl tin; and titanium compounds such as titanium tetrabutoxide.

When present, the concentration of the condensation catalyst is typically from 0.1 to 10% (w/w), alternatively from 0.5 to 5% (w/w), alternatively from 1 to 3% (w/w), based on the total weight of the silicone resin.

The radiation-curable silicone composition typically comprises a silicone resin having an average of at least two silicon-bonded radiation-sensitive groups per molecule and, optionally, a photoinitiator.

According to one embodiment, the radiation-curable silicone composition comprises a cured product of a silicone resin having the formula (R⁷R⁸₂SiO_{1/2})_{w} (R8₂SiO_{2/2})ₓ(R⁸SiO_{3/2})_{y}(SiO_{4/2})_{z} (IV), wherein each R⁷ is independently C₁ to C₁₀ hydrocarbyl, C₁ to C₁₀ halogen-substituted hydrocarbyl, or -OR⁶, wherein R⁶ is C₁ to C₈ hydrocarbyl or C₁ to C₈ halogen-substituted hydrocarbyl, each R⁸ is independently R¹, -H, or a radiation-sensitive group, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded radiation-sensitive groups per molecule. In the formula (IV), R⁶, w, x, y, z, and y+z are as described and exemplified above. Also, the hydrocarbyl and halogen-substituted hydrocarbyl groups represented by R⁷ are as described and exemplified above for R⁴,

Examples of radiation-sensitive groups represented by R⁸ include, but are not limited to, acryloyloxyalkyl, substituted acryloyloxyalkyl, an alkenyl ether group, alkenyl, and an epoxy-substituted organic group. As used herein, the term "radiation-sensitive group" means the group forms a reactive species, for example a free radical or cation, in the presence of a free radical or cationic photoinitiator when exposed to radiation having a wavelength of from 150 to 800 nm.

Examples of acryloyloxyalkyl groups represented by R⁸ include, but are not limited to, acryloyloxymethyl, 2-acryloyloxyethyl, 3-acryloyloxyypropyl, and 4-acryloyloxybutyl.

Examples of substituted acryloyloxyalkyl groups represented by R⁸ include, but are not limited to, methacryloyloxymethyl, 2-methacryloyloxyethyl, and 3-methacryloyloxylpropyl.

Examples of alkenyl ether groups represented by R⁸ include, but are not limited to, a vinyl ether group having the formula and -O-R⁹-O-CH=CH₂, wherein R⁹ is C₁ to C₁₀ hydrocarbylene or C₁ to C₁₀ halogen-substituted hydrocarbylene.

The hydrocarbylene groups represented by R⁹ typically have from 1 to 10 carbon atoms, alternatively from 1 to 6 carbon atoms, alternatively from 1 to 4 carbon atoms. Examples of hydrocarbylene groups include, but are not limited to, alkylene such as methylene, ethylene, propane-1,3-diyl, 2-methylpropane-1,3-diyl, butane-1,4-diyl, butane-1,3-diyl, pentane-1,5,-diyl, pentane-1,4-diyl, hexane-1,6-diyl, octane-1,8-diyl, and decane-1,10-diyl; cycloalkylene such as cyclohexane-1,4-diyl; arylene such as phenylene. Examples of halogen-substituted hydrocarbylene groups include, but are not limited to, divalent hydrocarbon groups wherein one or more hydrogen atoms have been replaced by halogen, such as fluorine, chlorine, and bromine, such as -CH₂CH₂CF₂CF₂CH₂CH₂-.

Examples of alkenyl groups represented by R⁸ include, but are not limited to, vinyl, allyl, propenyl, butenyl, and hexenyl.

As used herein, the term "epoxy-substituted organic group" refers to a monovalent organic group in which an oxygen atom, the epoxy substituent, is directly attached to two adjacent carbon atoms of a carbon chain or ring system. Examples of epoxy-substituted organic groups represented by R⁸ include, but are not limited to, 2,3-epoxypropyl, 3,4-epoxybutyl, 4,5-epoxypentyl, 2-glycidoxyethyl, 3-glycidoxypropyl, 4-glycidoxybutyl, 2-(3,4-epoxycylohexyl)ethyl, 3-(3,4-epoxycylohexyl)propyl, 2-(3,4-epoxy-3-methylcylohexyl)-2-methylethyl, 2-(2,3-epoxycylopentyl)ethyl, and 3-(2,3 epoxycylopentyl)propyl.

The silicone resin typically contains an average of at least two silicon-bonded radiation-sensitive groups per molecule. Generally, at least 50 mol%, alternatively at least 65 mol%, alternatively at least 80 mol% of the groups R⁸ in the silicone resin are radiation-sensitive groups. The term "mol% of the groups R⁸ in the silicone resin are radiation-sensitive groups" is defined as the ratio of the number of moles of silicon-bonded radiation-sensitive groups in the silicone resin to the total number of moles of the groups R⁸ in the resin, multiplied by 100.

Examples of silicone resins having the formula (IV) include, but are not limited to, resins having the following formulae:
(MeSiO_{3/2})_{0.25}(CH₂=C(CH₃)COO(CH₂)₃Si0_{3/2})_{0.75},
(MeSiO_{3/2})_{0.5}(CH₂=C(CH₃)COO(CH₂)₃SiO_{3/2})_{0.5},
(MeSiO_{3/2})_{0.67}(CH₂=C(CH₃)COO(CH₂)₃SiO_{3/2})_{0.33},
(PhSiO_{3/2})₀.₂₅(CH₂=C(CH₃)COO(CH₂)₃SiO_{3/2})_{0.75},
(PhSiO_{3/2})_{0.5}(CH₂=C(CH₃)COO(CH₂)₃SiO_{3/2})₀.₅,
(PhSiO_{3/2})_{0.67}(CH₂=C(CH₃)COO(CH₂)₃SiO_{3/2})_{0.33},
(MeSiO_{3/2})_{0.25}(CH₂=C(CH₃)COO(CH₂)₃SiO_{3/2})_{0.72}(Me₃SiO_{1/2})₀.₀₃,
(MeSiO_{3/2})_{0.5}(CH₂₌C(CH₃)COO(CH₂)₃SiO_{3/2})_{0.47}(Me₃SiO_{1/2})_{0.03},
(MeSiO_{3/2})_{0.67}(CH₂=C(CH₃)COO(CH₂)₃SiO_{3/2})_{0.30}(Me₃SiO_{1/2})_{0.03},
(MesiO_{3/2})_{0.67}(CH₂=CHCOO(CH₂)₃SiO_{3/2})_{0.33},
(PhSiO_{3/2})_{0.67}(CH₂=CHCOO(CH₂)₃SiO_{3/2})_{0.33}, 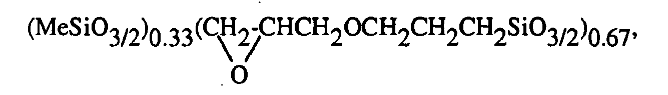 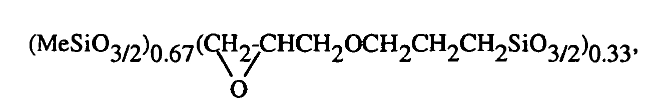 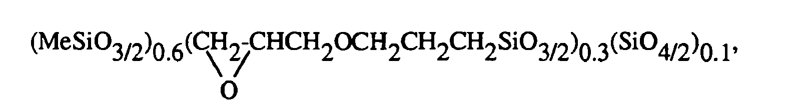 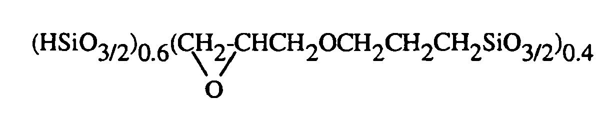 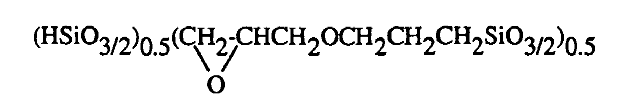 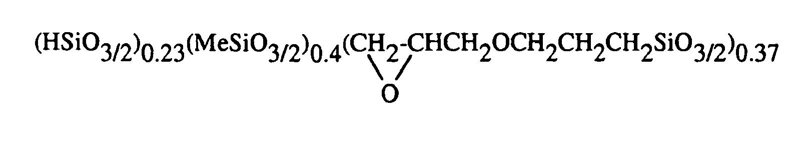 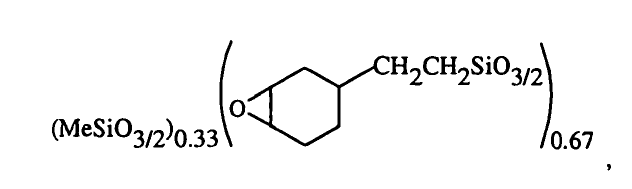 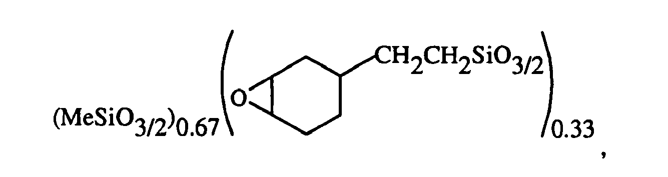 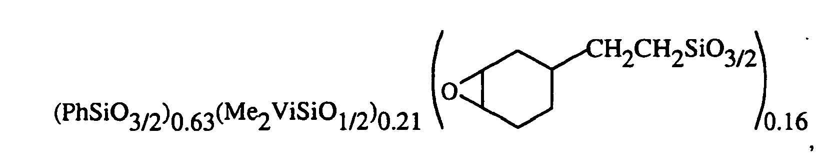 and
(MeSiO_{3/2})_{0.485}(HSiO_{3/2})_{0.485}(ViSiO_{3/2})_{0.3},
where Me is methyl, Ph is phenyl, Vi is vinyl, and the numerical subscripts outside the parenthesis denote mole fractions. Also, in the preceding formulae, the sequence of units is unspecified.

Methods of preparing silicone resins having silicon-bonded radiation-sensitive groups are known in the art. For example, silicone resins containing silicon-bonded acryloyloxyalkyl or substituted acryloyloxyalkyl groups can be prepared by co-hydrolyzing an acryloyloxyalkyl- or substituted-acryloyloxyalkylalkoxysilane and an alkoxysilane in the presence of an acidic or basic catalyst, as exemplified in U.S. Patent No. 5,738,976 and U.S. Patent No. 5,959,038. Alternatively, such resins can be produced by co-hydrolyzing an acryloyloxyalkyl- or substituted-acryloyloxayalkylchlorosilane and at least one chlorosilane, as taught in U.S. Patent No. 4,568,566.

Silicone reins containing silicon-bonded alkenyl ether groups can be prepared by reacting an alkoxysilane with water in the presence of an acidic condensation catalyst and subsequently treating the reaction mixture with a hydroxy-substituted vinyl ether and a transesterification catalyst, as described in U.S. Patent No. 5,861,467. In brief this method comprises the steps of (I) reacting (a) a silane having the formula RₓSi(OR¹)₄₋ₓ, (b) water, and (c) an acidic condensation catalyst; (II) removing alcohol from the mixture of step (I), (III) neutralizing the mixture of step (II), (IV) adding a vinyl ether compound having the formula HO-R²-O-CH=CH₂, (V) adding a transesterification catalyst to the mixture of step (IV); and (VI) removing volatiles from the mixture of step (V); wherein R is a monovalent hydrocarbon or halohydrocarbon radical having from 1 to 20 carbon atoms, R¹ is a monovalent alkyl radical having from 1 to 8 carbon atoms, R² is a divalent hydrocarbon or halohydrocarbon radical having from 1 to 20 carbon atoms, and x has a value of from 0 to 3, with the proviso that the molar ratio of water to alkoxy radicals is less than 0.5.

Alternatively, silicone resins containing alkenyl ether groups can be prepared by reacting an alkoxysilane, water, and a hydroxy-substituted vinyl ether compound in the presence of a non-acidic condensation catalyst, and then treating the reaction mixture with a transesterification catalyst, as described in U.S. Patent No. 5,824,761. Briefly, this method comprises (I) reacting (a) a silane having the formula RₓSi(OR¹)₄₋ₓ, (b) water, (c) a non-acidic condensation catalyst selected from amine carboxylates, heavy metal carboxylates, isocyanates, silanolates, phenoxides, mercaptides, CaO, BaO, LiOH, BuLi, amines, and ammonium hydroxides, and (d) a vinyl ether compound having the formula HO-R²-O-CH=CH₂; (II) removing alcohol from the mixture of (I); (III) neutralizing the mixture of (II); (IV) adding a transesterification catalyst to the mixture of (III); and (V) removing volatiles from the mixture of (IV); wherein R is a monovalent hydrocarbon or halohydrocarbon radical having from 1 to 20 carbon atoms, R¹ is a monovalent alkyl radical having from 1 to 8 carbon atoms, R² is a divalent hydrocarbon or halohydrocarbon radical having from 1 to 20 carbon atoms, and x has a value of from 0 to 3, with the proviso that the molar ratio of water to alkoxy radicals is less than 0.5.

Silicone resins containing silicon-bonded alkenyl groups can be prepared as described above for the silicone resin having the formula (I).

Silicone resins containing silicon-bonded epoxy-substituted organic groups can be prepared by cohydrolyzing an epoxy-functional alkoxysilane and an alkoxysilane in the presence of an organotitanate catalyst, as described in U.S. Patent No. 5,468,826. Alternatively, silicone resins containing silicon-bonded epoxy-substituted organic groups can be prepared by reacting a silicone resin containing silicon-bonded hydrogen atoms with an epoxy-functional alkene in the presence of a hydrosilylation catalyst, as described in U.S. Patent Nos. 6,831,145; 5,310,843; 5,530,075; 5,283,309; 5,468,827; 5,486,588; and 5,358,983.

The radiation-curable silicone composition can comprise additional ingredients, provided the ingredient does not prevent the silicone resin from curing to form the first interfacial coating, described above, of the electronic package. Examples of additional ingredients include, but are not limited to, adhesion promoters; dyes; pigments; anti-oxidants; heat stabilizers; flame retardants; flow control additives; fillers, including extending and reinforcing fillers; organic solvents; cross-linking agents; and photoinitiators.

For example, the radiation-curable silicone composition can further comprise at least one photoinitiator. The photoinitiator can be a cationic or free radical photoinitiator, depending on the nature of the radiation-sensitive groups in the silicone resin. For example, when the resin contains alkenyl ether or epoxy-substituted organic groups, the silicone composition can further comprise at least one cationic photoinitiator. The cationic photoinitiator can be any cationic photoinitiator capable of initiating cure (cross-linking) of the silicone resin upon exposure to radiation having a wavelength of from 150 to 800 nm. Examples of cationic photoinitiators include, but are not limited to, onium salts, diaryliodonium salts of sulfonic acids, triarylsulfonium salts of sulfonic acids, diaryliodonium salts of boronic acids, and triarylsulfonium salts of boronic acids.

Suitable onium salts include salts having a formula selected from R¹⁰₂ I⁺ MX_{z}⁻, R¹⁰₃ S⁺ MX_{z}⁻, R¹⁰₃ Se⁺ MX_{z}⁻, R¹⁰₄ P⁺ MX_{z}⁻, and R¹⁰₄ N⁺ MX_{z}, wherein each R¹⁰ is independently hydrocarbyl or substituted hydrocarbyl having from 1 to 30 carbon atoms; M is an element selected from transition metals, rare earth metals, lanthanide metals, metalloids, phosphorus, and sulfur; X is a halo (e.g., chloro, bromo, iodo), and z has a value such that the product z (charge on X + oxidation number of M) = -1. Examples of substituents on the hydrocarbyl group include, but are not limited to, C₁ to C₈ alkoxy, C₁ to C₁₆ alkyl, nitro, chloro, bromo, cyano, carboxyl, mercapto, and heterocyclic aromatic groups, such as pyridyl, thiophenyl, and pyranyl. Examples of metals represented by M include, but are not limited to, transition metals, such as Fe, Ti, Zr, Sc, V, Cr, and Mn; lanthanide metals, such as Pr, and Nd; other metals, such as Cs, Sb, Sn, Bi, Al, Ga, and In; metalloids, such as B, and As; and P. The formula MX_{z}⁻ represents a non-basic, non-nucleophilic anion. Examples of anions having the formula MX_{z}⁻ include, but are not limited to, BF₄⁻, PF₆⁻, AsF₆⁻, SbF₆⁼, SbCl₆⁻, and SnCl₆⁻.

Examples of onium salts include, but are not limited to, bis-diaryliodonium salts, such as bis(dodecyl phenyl)iodonium hexafluoroarsenate, bis(dodecylphenyl)iodonium hexafluoroantimonate, and dialkylphenyliodonium hexafluoroantimonate.

Examples of diaryliodonium salts of sulfonic acids include, but are not limited to, diaryliodonium salts of perfluoroalkylsulfonic acids, such as diaryliodonium salts of perfluorobutanesulfonic acid, diaryliodonium salts of perfluoroethanesulfonic acid, diaryliodonium salts of perfluorooctanesulfonic acid, and diaryliodonium salts of trifluoromethanesulfonic acid; and diaryliodonium salts of aryl sulfonic acids, such as diaryliodonium salts of para-toluenesulfonic acid, diaryliodonium salts of dodecylbenzenesulfonic acid, diaryliodonium salts of benzenesulfonic acid, and diaryliodonium salts of 3-nitrobenzenesulfonic acid.

Examples of triarylsulfonium salts of sulfonic acids include, but are not limited to, triarylsulfonium salts of perfluoroalkylsulfonic acids, such as triarylsulfonium salts of perfluorobutanesulfonic acid, triarylsulfonium salts of perfluoroethanesulfonic acid, triarylsulfonium salts of perfluorooctanesulfonic acid, and triarylsulfonium salts of trifluoromethanesulfonic acid; and triarylsulfonium salts of aryl sulfonic acids, such as triarylsulfonium salts of para-toluenesulfonic acid, triarylsulfonium salts of dodecylbenzenesulfonic acid, triarylsulfonium salts of benzenesulfonic acid, and triarylsulfonium salts of 3-nitrobenzenesulfonic acid.

Examples of diaryliodonium salts of boronic acids include, but are not limited to, diaryliodonium salts of perhaloarylboronic acids. Examples of triarylsulfonium salts of boronic acids include, but are not limited to, triarylsulfonium salts of perhaloarylboronic acid. Diaryliodonium salts of boronic acids and triarylsulfonium salts of boronic acids are well known in the art, as exemplified in European Patent Application No. EP 0562922.

The cationic photoinitiator can be a single cationic photoinitiator or a mixture comprising two or more different cationic photoinitiators, each as described above. The concentration of the cationic photoinitiator is typically from 0.01 to 20% (w/w), alternatively from 0.1 to 20% (w/w), alternatively from 0.1 to 5%, based on the weight of the silicone resin.

When the silicone resin contains acryoyloxyalkyl, substituted acryloyloxyalkyl, or alkenyl groups, the silicone composition can further comprise at least one free radical photoinitiator. The free radical photoinitiator can be any free radical photoinitiator capable of initiating cure (cross-linking) of the silicone resin upon exposure to radiation having a wavelength of from 150 to 800 nm.

Examples of free radical photoinitiators include, but are not limited to, benzophenone; 4,4'-bis(dimethylamino)benzophenone; halogenated benzophenones; acetophenone; α-hydroxyacetophenone; chloro acetophenones, such as dichloroacetophenones and trichloroacetophenones; dialkoxyacetophenones, such as 2,2-diethoxyacetophenone; α-hydoxyalkylphenones, such as 2-hydroxy-2-methyl-1-phenyl-1-propanone and 1-hydroxycyclohexyl phenyl ketone; α-aminoalkylphenones, such as 2-methyl-4'-(methylthio)-2-morpholiniopropiophenone; benzoin; benzoin ethers, such as benzoin methyl ether, benzoin ethyl ether, and benzoin isobutyl ether; benzil ketals, such as 2,2-dimethoxy-2-phenylacetophenone; acylphosphinoxides, such as diphenyl(2,4,6-trimethylbenzoyl)phosphine oxide; xanthone derivatives; thioxanthone derivatives; fluorenone derivatives; methyl phenyl glyoxylate; acetonaphthone; anthraquninone derivatives; sufonyl chlorides of aromatic compounds; and O-acyl α-oximinoketones, such as 1-phenyl-1,2-propanedione-2-(O-ethoxycarbonyl)oxime.

The free radical photoinitiator can also be a polysilane, such as the phenylmethylpolysilanes defined by West in U.S. Pat. No. 4,260,780; the aminated methylpolysilanes defined by Baney et al. in U.S. Pat. No. 4,314,956; the methylpolysilanes of Peterson et al. in U.S. Pat. No. 4,276,424; and the polysilastyrene defined by West et al. in U.S. Pat. No. 4,324,901.

The free radical photoinitiator can be a single free radical photoinitiator or a mixture comprising two or more different free radical photoinitiators. The concentration of the free radical photoinitiator is typically from 0.1 to 20% (w/w), alternatively from 1 to 10% (w/w), based on the weight of the silicone resin.

The peroxide-curable silicone composition typically comprises a silicone resin having silicon-bonded unsaturated groups and an organic peroxide. According to one embodiment, the peroxide-curable silicone composition comprises a silicone resin having the formula (R¹R¹¹₂SiO_{1/2})_{w}(R¹¹₂SiO_{2/2})ₓ(R¹¹SiO_{3/2})_{y}(SiO_{4/2})_{z} (V), wherein each R¹is independently C₁ to C₁₀ hydrocarbyl or C₁ to C₁₀ halogen-substituted hydrocarbyl, both free of aliphatic unsaturation; each R¹¹ is independently R¹, alkenyl, alkynyl, acryloxyalkyl, or substituted acryloxyalkyl; w is from 0 to 0.95, x is from 0 to 0.95, y is from 0 to 1, z is from 0 to 0.9, y+z is from 0.1 to 1, and w+x+y+z=1; and an organic peroxide. In the formula (V), R¹, w, x, y, z, and y+z are as described and exemplified above for the silicone resin having the formula (I).

The alkenyl groups represented by R¹¹, which may be the same or different, typically have from 2 to about 10 carbon atoms, alternatively from 2 to 6 carbon atoms, and are exemplified by, but not limited to, vinyl, allyl, butenyl, hexenyl, and octenyl.

The alkynyl groups represented by R¹¹, which may be the same or different, typically have from 2 to about 10 carbon atoms, alternatively from 2 to 6 carbon atoms, and are exemplified by, but not limited to, ethynyl, propynyl, butynyl, hexynyl, and octynyl.

In one embodiment of the silicone resin, the resin contains an average of at least one alkenyl group or alkynyl group per molecule.

The silicone resin typically contains less than 10% (w/w), alternatively less than 5% (w/w), alternatively less than 2% (w/w), of silicon-bonded hydroxy groups, as determined by ²⁹Si NMR.

Examples of silicone resins having the formula (V) include, but are not limited to, resins having the following formulae:
(Vi₂MeSiO_{1/2})_{0.25}(PhSiO_{3/2})_{0.75}, (ViMe₂SiO_{1/2})₀.₂₅(PhSiO_{3/2})₀.₇₅,
(ViMe₂SiO_{1/2})_{0.25}(MeSiO_{3/2})_{0.25}(PhSiO_{3/2})_{0.50}, (ViMe₂SiO_{1/2})_{0.15}(PhSiO_{3/2})_{0.75}
(Si0_{4/2})₀.₁, and (Vi₂MeSiO_{1/2})_{0.15}(ViMe₂SiO_{1/2})_{0.1}(PhSiO_{3/2})_{0.75}, where Me is methyl, Vi is vinyl, Ph is phenyl, and the numerical subscripts outside the parenthesis denote mole fractions. Also, in the preceding formulae, the sequence of units is unspecified.

The silicone resin can be a single silicone resin or a mixture comprising two or more different silicone resins, each as described above.

Methods of preparing silicone resins having silicon-bonded alkenyl groups or silicon-bonded alkynyl groups are well known in the art; many of these resins are commercially available. These resins are typically prepared by cohydrolyzing the appropriate mixture of chlorosilane precursors in an organic solvent, such as toluene. For example, a silicone resin consisting essentially of R¹R¹¹₂SiO_{1/2} units and R¹¹SiO_{3/2} units can be prepared by cohydrolyzing a compound having the formula R¹R¹¹₂SiCl and a compound having the formula R¹¹SiCl₃ in toluene, where R¹ and R¹¹ are as defined and exemplified above. The aqueous hydrochloric acid and silicone hydrolyzate are separated and the hydrolyzate is washed with water to remove residual acid and heated in the presence of a mild condensation catalyst to "body" the resin to the requisite viscosity. If desired, the resin can be further treated with a condensation catalyst in an organic solvent to reduce the content of silicon-bonded hydroxy groups. Alternatively, silanes containing hydrolysable groups other than chloro, such -Br, -I, -OCH₃, -OC(O)CH₃, -N(CH₃)₂, -NHCOCH₃, and -SCH₃, can be utilized as starting materials in the cohydrolysis reaction. The properties of the resin products depend on the types of silanes, the mole ratio of silanes, the degree of condensation, and the processing conditions.

Examples of organic peroxides include, diaroyl peroxides such as dibenzoyl peroxide, di-p-chlorobenzoyl peroxide, and bis-2,4-dichlorobenzoyl peroxide; dialkyl peroxides such as di-t-butyl peroxide and 2,5-dimethyl-2,5-di-(t-butylperoxy)hexane; diaralkyl peroxides such as dicumyl peroxide; alkyl aralkyl peroxides such as t-butyl cumyl peroxide and 1,4-bis(t-butylperoxyisopropyl)benzene; and alkyl aroyl peroxides such as t-butyl perbenzoate, t-butyl peracetate, and t-butyl peroctoate.

The organic peroxide can be a single peroxide or a mixture comprising two or more different organic peroxides. The concentration of the organic peroxide is typically from 0.1 to 5% (w/w), alternatively from 0.2 to 2% (w/w), based on the weight of the silicone resin.

The peroxide-curable silicone composition of the present invention can comprise additional ingredients, provided the ingredient does not prevent the silicone resin of the silicone composition from curing to form the first interfacial coating, described above, of the electronic package. Examples of additional ingredients include, but are not limited to, silicone rubbers; polyunsaturated compounds; free radical initiators; organic solvents; UV stabilizers; sensitizers; dyes; flame retardants; antioxidants; fillers, such as reinforcing fillers, extending fillers, and conductive fillers; and adhesion promoters.

The curable composition comprising a thermosetting polymer can further comprise aluminum oxide nanofibers, which are as described and exemplified above. When present, the nanofibers typically have a concentration of from 0.0001 to 99% (w/w), alternatively from 0.001 to 50% (w/w), alternatively from 0.01 to 25% (w/w), alternatively from 0.1 to 10% (w/w), alternatively from 1 to 5% (w/w), based on the total weight of the thermosetting polymer.

In one embodiment, the curable composition is a nanofiber-filled silicone composition comprising a curable silicone composition comprising a silicone resin; and aluminum oxide nanofibers, wherein the nanofibers comprise at least one aluminum oxide selected from γ-AlO(OH) and γ-Al₂O₃. The curable silicone composition can further comprise a solvent, provided when the curable silicone composition is a hydrosilylation-curable silicone composition the solvent is aprotic (i.e., does not contain hydrogen bonded to nitrogen or oxygen).

The curable silicone composition and aluminum oxide nanofibers are as described and exemplified above. The concentration of the aluminum oxide nanofibers in the nanofiber-filled silicone composition is typically from 0.001 to 50% (w/w), alternatively from 0.1 to 10% (w/w), alternatively from 0.5 to 5% (w/w), based on the total weight of the composition.

The curable composition comprising a thermosetting polymer and aluminum oxide nanofibers can be prepared by combining an aluminum oxide dispersion, described above, with the curable composition. If desired, the composition can be distilled under reduced pressure to remove solvent.

When the curable composition comprising a thermosetting polymer is a nanofiber-filled silicone composition comprising a curable silicone composition comprising a silicone resin, and aluminum oxide nanofibers, the composition can be prepared by preparing the silicone resin using the methods described above, in the presence of the aluminum oxide nanofibers, and then combining this mixture with the other ingredients of the curable silicone composition.

The release liner can be coated with the curable composition comprising a thermosetting polymer using conventional coating techniques, such as spin coating, dipping, spraying, brushing, extrusion, or screen-printing. The amount of the composition is sufficient to form a first polymer layer having a thickness of from 0.01 to 1000 µm after the polymer is cured in step (ii) of the method, described below.

In step (ii) of the immediately preceding method of forming the first polymer layer, the thermosetting polymer of the coated release liner is cured. The thermosetting polymer can be cured using a variety of methods, including exposing the polymer to ambient temperature, elevated temperature, moisture, or radiation, depending on the type of curable composition used to coat the release liner.

When the curable composition used to coat the release liner is a hydrosilylation-curable silicone composition comprising a silicone resin, the silicone resin of the coated release liner can be cured by heating the coating to a temperature of from room temperature (~23 ± 2 °C) to 250 °C, alternatively from room temperature to 200°C, alternatively from room temperature to 150 °C, at atmospheric pressure. The coating is heated for a length of time sufficient to cure (cross-link) the silicone resin. For example, the coating is typically heated at a temperature of from 150 to 200°C for a time of from 0.1 to 3 h.

When the curable composition used to coat the release liner is a condensation-curable silicone composition comprising a silicone resin having silicon-bonded hydroxy groups, the silicone resin can be cured (i.e., cross-linked) by heating the coating. For example, the coating is typically heated at a temperature of from 50 to 250 °C, for a period of from 1 to 50 h. When the condensation-curable silicone composition comprises a condensation catalyst, the silicone resin can typically be cured at a lower temperature, e.g., from room temperature (~23 ± 2°C) to 200 °C.

When the curable composition used to coat the release liner is a condensation-curable silicone composition comprising a silicone resin having silicon-bonded hydrogen atoms, the silicone resin can be cured by exposing the coating to moisture or oxygen at a temperature of from 100 to 450 °C for a period of from 0.1 to 20 h. When the condensation-curable silicone composition contains a condensation catalyst, the silicone resin can typically be cured at a lower temperature, e.g., from room temperature (~23 ± 2°C) to 400 °C.

When the curable composition used to coat the release liner is a condensation-curable silicone composition comprising a silicone resin having silicon-bonded hydrolysable groups, the silicone resin can be cured by exposing the coating to moisture at a temperature of from room temperature (-23 ± 2 °C) to 250 °C, alternatively from 100 to 200 °C, for a period of from 1 to 100 h. For example, the silicone resin can typically be cured by exposing the coating to a relative humidity of 30% at a temperature of from about room temperature (~23 ± 2°C) to 150 °C, for a period of from 0.5 to 72 h. Cure can be accelerated by application of heat, exposure to high humidity, and/or addition of a condensation catalyst to the composition.

When the curable composition used to coat the release liner is a radiation-curable silicone composition comprising a silicone resin having silicon-bonded radiation-sensitive groups, the silicone resin can be cured by exposing the coating to an electron beam. Typically, the accelerating voltage is from about 0.1 to 100 keV, the vacuum is from about 10 to 10-3 Pa, the electron current is from about 0.0001 to 1 ampere, and the power varies from about 0.1 watt to 1 kilowatt. The dose is typically from about 100 microcoulomb/cm² to 100 coulomb/cm², alternatively from about 1 to 10 coulombs/cm². Depending on the voltage, the time of exposure is typically from about 10 seconds to 1 hour.

Also, when the radiation-curable silicone composition further comprises a cationic or free radical photoinitiator, described above, the silicone resin can be cured by exposing the coating to radiation having a wavelength of from 150 to 800 nm, alternatively from 200 to 400 nm, at a dosage sufficient to cure (cross-link) the silicone resin. The light source is typically a medium pressure mercury-arc lamp. The dose of radiation is typically from 30 to 1,000 mJ/cm², alternatively from 50 to 500 mJ/cm². Moreover, the coating can be externally heated during or after exposure to radiation to enhance the rate and/or extent of cure.

When the silicone composition used to coat the release liner is a peroxide-curable silicone composition, the silicone resin can be cured by heating the coating at a temperature of from room temperature (~23 ± 2 °C) to 180 °C, for a period of from 0.05 to 1 h.

The method of forming the first polymer layer, wherein the layer comprises a thermoset polymer, can further comprise, after step (i) and before step (ii), applying a second release liner to the coated release liner of the first step to form an assembly, and compressing the assembly. The assembly can be compressed to remove excess composition and/or entrapped air, and to reduce the thickness of the coating. The assembly can be compressed using conventional equipment such as a stainless steel roller, hydraulic press, rubber roller, or laminating roll set. The assembly is typically compressed at a pressure of from 1,000 Pa to 10 MPa and at a temperature of from room temperature (~23 ± 2 °C) to 50 °C.

The method of forming the first polymer layer, wherein the layer comprises a thermoset polymer, can further comprise repeating the steps (i) and (ii) to increase the thickness of the polymer layer, provided the same curable composition is used for each coating step.

When the first polymer layer comprises a thermoplastic polymer and a fiber reinforcement, the polymer layer can be formed by (a) impregnating a fiber reinforcement in a composition comprising a thermoplastic polymer in a fluid state and (b) converting the thermoplastic polymer of the impregnated fiber reinforcement to a solid state.

In step (a) of the immediately preceding method of forming the first polymer layer, a fiber reinforcement is impregnated in a composition comprising a thermoplastic polymer in a fluid state.

The fiber reinforcement can be impregnated in a composition comprising a thermoplastic polymer in a fluid state using a variety of methods. For example, according to a first method, the fiber reinforcement can be impregnated by (i) applying a composition comprising a thermoplastic polymer in a fluid state to a release liner to form a film; (ii) embedding a fiber reinforcement in the film; and (iii) applying the composition to the embedded fiber reinforcement to form an impregnated fiber reinforcement.

In step (i) of the immediately preceding method of impregnating a fiber reinforcement, a composition comprising a thermoplastic polymer in a fluid state is applied to a release liner to form a film. The release liner and the composition are as described and exemplified above. The composition can be applied to the release liner using conventional coating techniques, such as spin coating, dipping, spraying, brushing, extrusion, or screen-printing. The composition is applied in an amount sufficient to embed the fiber reinforcement in step (ii), below.

In step (ii), a fiber reinforcement is embedded in the film. The fiber reinforcement is as described and exemplified above. The fiber reinforcement can be embedded in the film by simply placing the reinforcement on the film and allowing the composition of the film to saturate the reinforcement.

In step (iii) the composition comprising a thermoplastic polymer in a fluid state is applied to the embedded fiber reinforcement to form an impregnated fiber reinforcement. The composition can be applied to the embedded fiber reinforcement using conventional methods, as described above for step (i).

The first method of impregnating a fiber reinforcement can further comprise the steps of (iv) applying a second release liner to the impregnated fiber reinforcement to form an assembly; and (v) compressing the assembly. Also, the first method can further comprise after step (ii) and before step (iii), degassing the embedded fiber reinforcement and/or after step (iii) and before step (iv), degassing the impregnated fiber reinforcement.

The assembly can be compressed to remove excess composition and/or entrapped air, and to reduce the thickness of the impregnated fiber reinforcement. The assembly can be compressed using conventional equipment such as a stainless steel roller, hydraulic press, rubber roller, or laminating roll set. The assembly is typically compressed at a pressure of from 1,000 Pa to 10 MPa and at a temperature of from room temperature to 200 °C.

The embedded fiber reinforcement or impregnated fiber reinforcement can be degassed by subjecting it to a vacuum at a temperature sufficient to maintain the fluid state of the thermoplastic polymer.

Alternatively, according to a second method, the fiber reinforcement can be impregnated in the composition comprising a thermoplastic polymer in a fluid state by (i) depositing a fiber reinforcement on a release liner, (ii) embedding the fiber reinforcement in a composition comprising a thermoplastic polymer in a fluid state; and (iii) applying the composition to the embedded fiber reinforcement to form an impregnated fiber reinforcement. The second method can further comprise the steps of (iv) applying a second release liner to the impregnated fiber reinforcement to form an assembly; and (v) compressing the assembly. In the second method, steps (iii) to (v) are as described above for the first method of impregnating a fiber reinforcement in a composition comprising a thermoplastic polymer in a fluid state. Also, the second method can further comprise after step (ii) and before step (iii), degassing the embedded fiber reinforcement and/or after step (iii) and before step (iv), degassing the impregnated fiber reinforcement.

In step (ii) of the immediately preceding method of impregnating a fiber reinforcement, a fiber reinforcement is embedded in a composition comprising a thermoplastic polymer in a fluid state. The fiber reinforcement can be embedded in the composition by simply covering the reinforcement with the composition and allowing the composition to saturate the reinforcement.

Furthermore, when the fiber reinforcement is a woven or nonwoven fabric, the reinforcement can be impregnated in a composition comprising a thermoplastic polymer in a fluid state by passing it through the composition. The fabric is typically passed through the composition at a rate of from 1 to 1,000 cm/min.

In step (b) of the preceding method of forming the first polymer layer, the thermoplastic polymer of the impregnated fiber reinforcement is converted to a solid state. When the composition used to coat the release liner comprises a thermoplastic polymer in a molten state, the thermoplastic polymer can be converted to a solid state by allowing the polymer to cool to a temperature below the liquid-solid transition temperature (T_{g} or Tₘ), for example, room temperature. When the composition used to coat the release liner comprises a thermoplastic polymer and an organic solvent, the thermoplastic polymer can be converted to a solid state by removing at least a portion of the solvent. The organic solvent can be removed by allowing the solvent to evaporate at ambient temperature or by heating the coating to a moderate temperature, for example, below the solid-liquid transition temperature of the polymer.

The method of forming the first polymer layer, wherein the layer contains a composition comprising a thermoplastic resin in fluid state and a fiber reinforcement, can further comprise repeating the steps (a) and (b) to increase the thickness of the polymer layer, provided the same composition is used for each impregnation.

When the first polymer layer comprises a thermoset polymer and a fiber reinforcement, the polymer layer can be formed by (a') impregnating a fiber reinforcement in a curable composition comprising a thermosetting polymer; and (b') curing the thermosetting polymer of the impregnated fiber reinforcement.

In step (a') of the immediately preceding method of forming the first polymer layer, a fiber reinforcement is impregnated in a curable composition comprising a thermosetting polymer. The fiber reinforcement and composition are as described and exemplified above. The fiber reinforcement can be impregnated in the curable composition using the method described above for impregnating a fiber reinforcement in a composition comprising a thermoplastic polymer.

In step (b') of the immediately preceding method of forming the first polymer layer, the thermosetting polymer of the impregnated fiber reinforcement is cured. The thermosetting polymer can be cured using a variety of methods, including, exposing the impregnated fiber reinforcement to ambient or elevated temperature, moisture, or radiation, depending on the type of curable composition used to impregnate the fiber reinforcement.

When the curable silicone composition used to impregnate the fiber reinforcement is a curable silicone composition comprising a silicone resin, the resin can be cured by exposing the impregnated fiber reinforcement to the conditions described in the method of forming the first polymer layer, wherein the layer comprises a cured product of a silicone resin.

The method of preparing the first polymer layer, wherein the layer comprises a thermoset polymer and a fiber reinforcement, can further comprise repeating the steps (a') and (b') to increase the thickness of the polymer layer, provided the same curable composition is used for each impregnation.

The method of preparing the reinforced silicone resin film can further comprise forming at least one additional polymer layer on the first polymer layer. Each additional polymer layer can be formed as described above in the method of forming the first polymer layer, except each additional polymer layer is formed directly on an existing polymer layer rather than a release liner.

When the first polymer layer is formed on a release liner, the method of preparing the reinforced silicone resin film further comprises separating the first polymer layer from the release liner. The first polymer layer can be separated from the release liner either before or after at least one additional polymer layer is formed. Moreover, the first polymer layer can be separated from the release liner by mechanically peeling the layer away from the release liner. When the first polymer layer is formed between two release liners, the method of preparing the reinforced silicone resin film further comprises separating the first polymer layer from at least one of the release liners before at least one additional polymer layer is formed on the first polymer layer.

The reinforced silicone resin film of the present invention typically comprises from 1 to 99% (w/w), alternatively from 10 to 95% (w/w), alternatively from 30 to 95% (w/w), alternatively from 50 to 95% (w/w), of the cured silicone resin. Also, the reinforced silicone resin film typically has a thickness of from 1 to 3000 µm, alternatively from 15 to 500 µm, alternatively from 15 to 300 µm, alternatively from 20 to 150 µm, alternatively from 30 to 125 µm.

The reinforced silicone resin film typically has a flexibility such that the film can be bent over a cylindrical steel mandrel having a diameter less than or equal to 3.2 mm without cracking, where the flexibility is determined as described in ASTM Standard D522-93a, Method B.

The reinforced silicone resin film has low coefficient of linear thermal expansion (CTE), high tensile strength, high modulus, and high resistance to thermally induced cracking. For example the film typically has a CTE of from 0 to 80 µm/m°C, alternatively from 0 to 20 µm/m°C, alternatively from 2 to 10 µm/m°C, at temperature of from room temperature (~23 ± 2°C) to 200°C. Also, the film typically has a tensile strength at 25°C of from 5 to 200 MPa, alternatively from 20 to 200 MPa, alternatively from 50 to 200 MPa. Further, the reinforced silicone resin film typically has a Young's modulus at 25°C of from 0.5 to 10 GPa, alternatively from 1 to 6 GPa, alternatively from 3 to 5 GPa.

The transparency of the reinforced silicone resin film depends on a number of factors, such as the composition of the cured silicone resin, the thickness of the film, and the type and concentration of the reinforcement. The reinforced silicone resin film typically has a transparency (% transmittance) of at least 5%, alternatively at least 10%, alternatively at least 15%, alternatively at least 20%, in the visible region of the electromagnetic spectrum.

The reinforced silicone resin film of the present invention is useful in applications requiring films having high thermal stability, flexibility, mechanical strength, and transparency. For example, the silicone resin film can be used as an integral component of flexible displays, solar cells, flexible electronic boards, touch screens, fire-resistant wallpaper, and impact-resistant windows. The film is also suitable substrates for transparent or nontransparent electrodes.

### EXAMPLES

The following examples are presented to better illustrate the reinforced silicone resin film and silicone composition of the present invention, but are not to be considered as limiting the invention, which is delineated in the appended claims. Unless otherwise noted, all parts and percentages reported in the examples are by weight.

The mole ratio of acetic acid to aluminum oxide fibers was calculated by assuming the aluminum oxide fibers have the formula Al₂O3.

Aluminum oxide fibers are fibers prepared by heating NanoCeram® gamma alumina fiber nanopowder, sold by Argonide Corporation (Sanford, F), in air at about 500 °C for 1 h. The heat-treated fibers contained 96% (w/w) of γ-AlO(OH) and 4% (w/w) of γ-Al₂O₃, as determined by X-ray diffraction.

ORGANOSILICASOL^{™} IPA-ST, obtained from Nisan Chemical (Houston, Texas), is a dispersion of colloidal silica in isopropyl alcohol, where the colloidal silica has a particle size of 10-15 nm. The dispersion contains 30% (w/w) of SiO₂, and has a pH of 2-4 and a specific gravity of 0.96-1.02.

Glass Fabric is a heat-treated glass fabric prepared by heating style 106 electrical glass fabric having a plain weave and a thickness of 37.5 µm at 575 °C for 6 h. The untreated glass fabric was obtained from JPS Glass (Slater, SC).

### Example 1

Aluminum oxide fibers (2.0 g), 4.4 g of acetic acid, and 35.6 g of de-ionized water were combined in a 100 mL round bottom flask equipped with a condenser, a stirrer, and a heating mantle. The mole ratio of acetic acid to alumina fibers was 3.74. The mixture was heated to reflux with stirring. The mixture was heated at reflux for 120 hours and then allowed to cool to room temperature. The mixture was then centrifuged at 2000 rpm for 30 minutes. The supernatant dispersion was separated from the residue. Approximately, 20% (w/w) of the original solid was dispersed as discrete nanofibers in the aqueous solvent. A scanning electron micrograph of the aluminum oxide fibers is shown in Figure 1. A transmission electron micrograph of the aluminum oxide nanofibers is shown in Figure 2.

### Example 2

ORGANOSILICASOL^{™} IPA-ST (200 g) and 28 g of de-ionized water were combined in a 500 mL three necked round bottom flask equipped with a mechanical stirrer and a thermometer. The mixture was stirred and chilled with an ice water bath to 2 °C. Methyltrimethoxysilane (70.72 g) and 3.48 g of acetic acid were added to the mixture. The mixture was stirred for 3.5 h, after which time the ice water bath was removed and the mixture was allowed to warm up to room temperature. The mixture was stirred for an additional 14 h at room temperature. The resin solution was translucent and had a solid content of 24.5% (w/w), as determined by heating a 1.0 g of the sample at 150 °C for 1 h. A silicone composition was prepared by combining the resin solution (8.2 g) with 50 g of the dispersion of Example 1.

### Example 3

Glass fabric (38.1 cm x 8.9 cm) was impregnated with the silicone composition of Example 2 by passing the fabric through the composition at a rate of about 5 cm/s. The impregnated fabric was then hung vertically in a fume hood at room temperature to dry, and then cured in an air-circulating oven according to the following cycle: room temperature to 75 °C at 1 °C/min., 75 °C for 1 h; 75 °C to 100 °C at 1 °C/min., 100 °C for 1 h; and 100 °C to 125 °C at 1 °C/min., 125 °C for 1 h. The oven was turned off and the silicone resin film was allowed to cool to room temperature.

The reinforced silicone resin film was then heat-treated in an oven in a nitrogen atmosphere under the following conditions: room temperature to 575 °C at 5 °C/min., 575 °C for 1 h. The oven was turned off and the reinforced silicone resin film was allowed to cool to room temperature. Photomicrographs of the film after heat treatment are shown in Figures 1A, 1B, and 1C. The heat-treated film is free of cracks.

## Claims

1. A reinforced silicone resin film comprising at least one polymer layer, wherein at least one of the polymer layers comprises a cured product of at least one silicone resin, and at least one of the polymer layers comprises aluminum oxide nanofibers, wherein the nanofibers comprise at least one aluminum oxide selected from γ-AlO(OH) and γ-Al₂O₃.

2. The reinforced silicone resin film according to claim 1, wherein each of the polymer layers has a thickness of from 0.01 to 1000 µm.

3. The reinforced silicone resin film according to claim 1, wherein the film has from 1 to 10 polymer layers, preferably wherein the film has 1 polymer layer.

4. The reinforced silicone resin film according to claim 1, wherein the aluminum oxide nanofibers are untreated.

5. The reinforced silicone resin film according to claim 1, wherein the aluminum oxide nanofibers are treated.

6. The reinforced silicone resin film according to claim 1, wherein the aluminum oxide nanofibers comprise from 0 to 100% (w/w) of γ-AIO(OH) and from 100 to 0% (w/w) of γ-Al₂O₃, preferably wherein the aluminium oxide nanofibers comprise from 30 to 99% (w/w) of γ-AlO(OH) and from 70 to 1% (w/w) of γ-Al₂O₃.

7. The reinforced silicone resin film according to claim 1, wherein the concentration of the aluminum oxide nanofibers in the polymer layer is from 0.001 to 50% (w/w), based on the total weight of the polymer layer.

8. The reinforced silicone resin film according to claim 1, wherein at least one of the polymer layers comprises a fiber reinforcement.

9. The reinforced silicone resin film according to claim 8, wherein the fiber reinforcement is selected from a woven fabric, a nonwoven fabric, and individual fibers.

10. The reinforced silicone resin film according to claim 9 wherein the fiber reinforcement comprises glass fibers.

11. The reinforced silicone resin film according to claim 1, wherein the silicone resin has the formula
(a) (R¹2SiO_{1/2})_{w}(R²SiO_{2/2})ₓ(R²₂SiO_{3/2})_{y}(SiO_{4/2})_{z} (I), wherein each R¹ is independently C₁ to C₁₀ hydrocarbyl or C₁ to C₁₀ halogen-substituted hydrocarbyl, both free of aliphatic unsaturation, each R² is independently R¹ or alkenyl, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded alkenyl groups per molecule;
(b) (R¹R³₂SiO_{1/2})_{w}(R³₂SiO_{2/2})ₓ(R³₂SiO_{3/2})_{y}(Si_{4/2})_{z} (II), wherein each R¹ is independently C₁ to C₁₀ hydrocarbyl or C₁ to C₁₀ halogen-substituted hydrocarbyl, both free of aliphatic unsaturation, each R³ is independently R¹ or -H, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded hydrogen atoms per molecule;
(c) (R⁴R⁵₂SiO_{1/2})_{w}(R⁵2SiO_{2/2})ₓ(R⁵₂SiO_{3/2})_{y}(SiO_{4/2})_{z} (III), wherein each R⁴ is independently C₁ to C₁₀ hydrocarbyl or C₁ to C₁₀ halogen-substituted hydrocarbyl, each R⁵ is independently R⁴, -H, -OH, or a hydrolysable group, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded hydrogen atoms, hydroxy groups, or hydrolysable groups per molecule;
(d) (R⁷R⁸₂SiO_{1/2})_{w}(R⁸₂SiO_{2/2})ₓ(R⁸₂SiO_{3/2})_{y}(SiO_{4/2})_{z} (IV), wherein each R⁷ is independently C₁ to C₁₀ hydrocarbyl, C₁ to C₁₀ halogen-substituted hydrocarbyl, or -OR⁶, wherein R⁶ is C₁ to C₈ hydrocarbyl or C₁ to C₈ halogen-substituted hydrocarbyl, each R⁸ is independently R¹, -H or a radiation-sensitive group, w is from 0 to 0.95, x is from 0 to 0.95, y is from 0 to 1, z is from 0 to 0.9, y+z is from 0.1 to 1, and w+x+y+z=1, provided the silicone resin has an average of at least two silicon-bonded radiation-sensitive groups per molecule; or
(e) (R¹R¹¹₂SiO_{1/2})_{w}(R¹¹₂SiO_{2/2})ₓ(R¹¹SiO_{3/2})_{y}(SiO_{4/2})_{z} (V), wherein each R¹ is independently C₁ to C₁₀ hydrocarbyl or C₁ to C₁₀ halogen-substituted hydrocarbyl, both free of aliphatic unsaturation; each R¹¹ is independently R¹, alkenyl, alkynyl, acryloxyalkyl, or substituted acryloxyalkyl; w is from 0 to 0.95, x is from 0 to 0.95, y is from 0 to 1, z is from 0 to 0.9, y+z is from 0.1 to 1, and w+x+y+z=1.

12. A nanofiber-filled silicone composition comprising:
(A) a curable silicone composition comprising a silicone resin; and
(B) aluminum oxide nanofibers, wherein the nanofibers comprise at least one aluminum oxide selected from γ- AlO(OH) and γ-Al₂O₃.

13. The nanofiber-filled silicone composition according to claim 12, further comprising a solvent, provided when the curable silicone composition is a hydrosilylation-curable silicone composition the solvent is aprotic.

14. The nanofiber-filled silicone composition according to claim 12, wherein the curable silicone composition is selected from a hydrosilylation-curable silicone composition, a condensation-curable silicone composition, a radiation-curable silicone composition, and a peroxide-curable silicone composition.

15. The nanofiber-filled silicone composition according to claim 12, wherein the concentration of the aluminum oxide nanofibers is from 0.001 to 50% (w/w), based on the total weight of the nanofiber-filled silicone composition.

## Patentansprüche

1. Ein Film aus verstärktem Siliconharz, der mindestens eine Polymerschicht beinhaltet, wobei mindestens eine der Polymerschichten ein ausgehärtetes Produkt aus mindestens einem Siliconharz beinhaltet und mindestens eine der Polymerschichten Nanofasern aus Aluminiumoxid beinhaltet, wobei die Nanofasern mindestens ein Aluminiumoxid, ausgewählt aus γ-AlO(OH) und γ-Al₂O₃, beinhalten.

2. Film aus verstärktem Siliconharz gemäß Anspruch 1, wobei jede der Polymerschichten eine Dicke von von 0,01 bis 1000 µm aufweist.

3. Film aus verstärktem Siliconharz gemäß Anspruch 1, wobei der Film von 1 bis 10 Polymerschichten aufweist, wobei der Film vorzugsweise 1 Polymerschicht aufweist.

4. Film aus verstärktem Siliconharz gemäß Anspruch 1, wobei die Nanofasern aus Aluminiumoxid unbehandelt sind.

5. Film aus verstärktem Siliconharz gemäß Anspruch 1, wobei die Nanofasern aus Aluminiumoxid behandelt sind.

6. Film aus verstärktem Siliconharz gemäß Anspruch 1, wobei die Nanofasern aus Aluminiumoxid von 0 bis 100 % (Gewichtsprozent) γ-AlO(OH) und von 100 bis 0 % (Gewichtsprozent) γ-Al₂O₃ beinhalten, wobei die Nanofasern aus Aluminiumoxid vorzugsweise von 30 bis 99 % (Gewichtsprozent) γ-AlO(OH) und von 70 bis 1 % (Gewichtsprozent) γ-Al₂O₃ beinhalten.

7. Film aus verstärktem Siliconharz gemäß Anspruch 1, wobei die Konzentration der Nanofasern aus Aluminiumoxid in der Polymerschicht von 0,001 bis 50 % (Gewichtsprozent), basierend auf dem Gesamtgewicht der Polymerschicht, beträgt.

8. Film aus verstärktem Siliconharz gemäß Anspruch 1, wobei mindestens eine der Polymerschichten eine Faserverstärkung beinhaltet.

9. Film aus verstärktem Siliconharz gemäß Anspruch 8, wobei die Faserverstärkung aus einem Fasergewebe, einem Faservlies und einzelnen Fasern ausgewählt ist.

10. Film aus verstärktem Siliconharz gemäß Anspruch 9, wobei die Faserverstärkung Glasfasern beinhaltet.

11. Film aus verstärktem Siliconharz gemäß Anspruch 1, wobei das Siliconharz die folgende Formel aufweist:
(a) (R¹R²₂SiO_{1/2})_{w}(R²₂SiO_{2/2})ₓ(R²SiO_{3/2})_{y}(SiO_{4/2})_{z} (I), wobei jedes R¹ unabhängig C₁- bis C₁₀-Hydrocarbyl oder C₁- bis C₁₀- halogensubstituiertes Hydrocarbyl ist, beide frei von aliphatischer Ungesättigtheit sind, jedes R² unabhängig R¹ oder Alkenyl ist, w von 0 bis 0,95 ist, x von 0 bis 0,95 ist, y von 0 bis 1 ist, z von 0 bis 0,9 ist, y + z von 0,1 bis 1 ist und w + x + y + z = 1 ist, vorausgesetzt das Siliconharz verfügt über einen Durchschnitt von mindestens zwei siliziumgebundenen Alkenylgruppen pro Molekül;
(b) (R¹R³₂SiO_{1/2})_{w}(R³₂SiO_{2/2})ₓ(R³SiO_{3/2})_{y}(SiO_{4/2})_{z} (II), wobei jedes R¹ unabhängig C₁- bis C₁₀-Hydrocarbyl oder C₁- bis C₁₀- halogensubstituiertes Hydrocarbyl ist, beide frei von aliphatischer Ungesättigtheit sind, jedes R³ unabhängig R¹ oder -H ist, w von 0 bis 0,95 ist, x von 0 bis 0,95 ist, y von 0 bis 1 ist, z von 0 bis 0,9 ist, y + z von 0,1 bis 1 ist und w + x + y + z = 1 ist, vorausgesetzt das Siliconharz verfügt über einen Durchschnitt von mindestens zwei siliziumgebundenen Wasserstoffatomen pro Molekül;
(c) (R⁴R⁵₂SiO_{1/2})_{w}(R⁵₂SiO_{2/2})ₓ(R⁵SiO_{3/2})_{y}(SiO_{4/2})_{z} (III), wobei jedes R⁴ unabhängig C₁- bis C₁₀-Hydrocarbyl oder C₁- bis C₁₀- halogensubstituiertes Hydrocarbyl ist, jedes R⁵ unabhängig R⁴, -H, -OH oder eine hydrolysierbare Gruppe ist, w von 0 bis 0,95 ist, x von 0 bis 0,95 ist, y von 0 bis 1 ist, z von 0 bis 0,9 ist, y + z von 0,1 bis 1 ist und w + x + y + z = 1 ist, vorausgesetzt das Siliconharz verfügt über einen Durchschnitt von mindestens zwei siliziumgebundenen Wasserstoffatomen, Hydroxygruppen oder hydrolysierbaren Gruppen pro Molekül;
(d) (R⁷R⁸₂SiO_{1/2})_{w}(R⁸₂SiO_{2/2})ₓ(R⁸SiO_{3/2})_{y}(SiO_{4/2})_{z} (IV), wobei jedes R⁷ unabhängig C₁- bis C₁₀-Hydrocarbyl, C₁- bis C₁₀- halogensubstituiertes Hydrocarbyl oder - OR⁶ ist, wobei R⁶ C₁- bis C₈-Hydrocarbyl oder C₁- bis C₈ halogensubstituiertes Hydrocarbyl ist, jedes R⁸ unabhängig R¹, -H oder eine strahlungsempfindliche Gruppe ist, w von 0 bis 0,95 ist, x von 0 bis 0,95 ist, y von 0 bis 1 ist, z von 0 bis 0,9 ist, y + z von 0,1 bis 1 ist und w + x + y + z = 1 ist, vorausgesetzt das Siliconharz verfügt über einen Durchschnitt von mindestens zwei siliziumgebundenen strahlungsempfindlichen Gruppen pro Molekül, oder
(e) (R¹R¹¹₂SiO_{1/2})_{w}(R¹¹₂SiO_{2/2})ₓ(R¹¹SiO_{3/2})_{y}(SiO_{4/2})_{z} (V), wobei jedes R¹ unabhängig C₁- bis C₁₀-Hydrocarbyl oder C₁- bis C₁₀- halogensubstituiertes Hydrocarbyl ist, beide frei von aliphatischer Ungesättigtheit sind, jedes R¹¹ unabhängig R¹, Alkenyl, Alkinyl, Acryloxyalkyl oder substituiertes Acryloxyalkyl ist, w von 0 bis 0,95 ist, x von 0 bis 0,95 ist, y von 0 bis 1 ist, z von 0 bis 0,9 ist, y + z von 0,1 bis 1 ist und w + x + y + z = 1 ist.

12. Eine mit Nanofasern gefüllte Siliconzusammensetzung, die Folgendes beinhaltet:
(A) eine aushärtbare Siliconzusammensetzung, die ein Siliconharz beinhaltet; und
(B) Nanofasern aus Aluminiumoxid, wobei die Nanofasern mindestens ein Aluminiumoxid, ausgewählt aus γ-AlO(OH) und γ-Al₂O₃, beinhalten.

13. Mit Nanofasern gefüllte Siliconzusammensetzung gemäß Anspruch 12, die ferner ein Lösungsmittel beinhaltet, vorausgesetzt dass, wenn die aushärtbare Siliconzusammensetzung eine durch Hydrosilylierung aushärtbare Siliconzusammensetzung ist, das Lösungsmittel aprotisch ist.

14. Mit Nanofasern gefüllte Siliconzusammensetzung gemäß Anspruch 12, wobei die aushärtbare Siliconzusammensetzung aus einer durch Hydrosilylierung aushärtbaren Siliconzusammensetzung, einer durch Kondensation aushärtbaren Siliconzusammensetzung, einer durch Strahlung aushärtbaren Siliconzusammensetzung und einer durch Peroxid aushärtbaren Siliconzusammensetzung ausgewählt ist.

15. Mit Nanofasern gefüllte Siliconzusammensetzung gemäß Anspruch 12, wobei die Konzentration der Nanofasern aus Aluminiumoxid von 0,001 bis 50 % (Gewichtsprozent), basierend auf dem Gesamtgewicht der mit Nanofasern gefüllten Siliconzusammensetzung, beträgt.

## Revendications

1. Un film de résine de silicone renforcée comprenant au moins une couche de polymère, dans lequel au moins une des couches de polymère comprend un produit durci d'au moins une résine de silicone, et au moins une des couches de polymère comprend des nanofibres d'oxyde d'aluminium, dans lequel les nanofibres comprennent au moins un oxyde d'aluminium sélectionné parmi γ-AlO(OH) et γ-Al₂O₃.

2. Le film de résine de silicone renforcée selon la revendication 1, dans lequel chacune des couches de polymère a une épaisseur allant de 0,01 à 1 000 µm.

3. Le film de résine de silicone renforcée selon la revendication 1, dans lequel le film a de 1 à 10 couches de polymère, de préférence dans lequel le film a 1 couche de polymère.

4. Le film de résine de silicone renforcée selon la revendication 1, dans lequel les nanofibres d'oxyde d'aluminium ne sont pas traitées.

5. Le film de résine de silicone renforcée selon la revendication 1, dans lequel les nanofibres d'oxyde d'aluminium sont traitées.

6. Le film de résine de silicone renforcée selon la revendication 1, dans lequel les nanofibres d'oxyde d'aluminium comprennent de 0 à 100 % (m/m) de γ-AlO(OH) et de 100 à 0 % (m/m) de γ-Al₂O₃, de préférence dans lequel les nanofibres d'oxyde d'aluminium comprennent de 30 à 99 % (m/m) de γ-AlO(OH) et de 70 à 1 % (m/m) de γ-Al₂O₃.

7. Le film de résine de silicone renforcée selon la revendication 1, dans lequel la concentration des nanofibres d'oxyde d'aluminium dans la couche de polymère va de 0,001 à 50 % (m/m), sur la base du poids total de la couche de polymère.

8. Le film de résine de silicone renforcée selon la revendication 1, dans lequel au moins une des couches de polymère comprend un renforcement par fibres.

9. Le film de résine de silicone renforcée selon la revendication 8, dans lequel le renforcement par fibres est sélectionné parmi un tissu tissé, un tissu non tissé, et des fibres individuelles.

10. Le film de résine de silicone renforcée selon la revendication 9 dans lequel le renforcement par fibres comprend des fibres de verre.

11. Le film de résine de silicone renforcée selon la revendication 1, dans lequel la résine de silicone a la formule
(a) (R¹R²₂SiO_{1/2})_{w}(R²₂SiO_{2/2})ₓ(R²SiO_{3/2})_{y}(SiO_{4/2})_{z} (I), dans laquelle chaque R¹ est indépendamment de l'hydrocarbyle C₁ à C₁₀ ou de l'hydrocarbyle substitué par de l'halogène C₁ à C₁₀, tous deux ne présentant pas d'insaturation aliphatique, chaque R² est indépendamment R¹ ou de l'alcényle, w va de 0 à 0,95, x va de 0 à 0,95, y va de 0 à 1, z va de 0 à 0,9, y+z va de 0,1 à 1, et w+x+y+z = 1, à condition que la résine de silicone ait une moyenne d'au moins deux groupes alcényles liés par silicium par molécule ;
(b) (R¹R³₂SiO_{1/2})_{w}(R³₂SiO_{2/2})ₓ(R³SiO_{3/2})_{y}(SiO_{4/2})_{z} (II), dans laquelle chaque R¹ est indépendamment de l'hydrocarbyle C₁ à C₁₀ ou de l'hydrocarbyle substitué par de l'halogène C₁ à C₁₀, tous deux ne présentant pas d'insaturation aliphatique, chaque R³ est indépendamment R¹ ou -H, w va de 0 à 0,95, x va de 0 à 0,95, y va de 0 à 1, z va de 0 à 0,9, y+z va de 0,1 à 1, et w+x+y+z = 1, à condition que la résine de silicone ait une moyenne d'au moins deux atomes d'hydrogène liés par silicium par molécule ;
(c) (R⁴R⁵₂SiO_{1/2})_{w}(R⁵₂SiO_{2/2})ₓ(R⁵SiO_{3/2})_{y}(SiO_{4/2})_{z} (III), dans laquelle chaque R⁴ est indépendamment de l'hydrocarbyle C₁ à C₁₀ ou de l'hydrocarbyle substitué par de l'halogène C₁ à C₁₀, chaque R⁵ est indépendamment R⁴, -H, -OH, ou un groupe pouvant être hydrolysé, w va de 0 à 0,95, x va de 0 à 0,95, y va de 0 à 1, z va de 0 à 0,9, y+z va de 0,1 à 1, et w+x+y+z = 1, à condition que la résine de silicone ait une moyenne d'au moins deux atomes d'hydrogène, groupes hydroxy, ou groupes pouvant être hydrolysés, liés par silicium par molécule ;
(d) (R⁷R8₂SiO_{1/2})_{w}(R⁸₂SiO_{2/2})ₓ(R⁸SiO_{3/2})_{y}(SiO_{4/2})_{z} (IV), dans laquelle chaque R⁷ est indépendamment de l'hydrocarbyle C₁ à C₁₀, de l'hydrocarbyle substitué par de l'halogène C₁ à C₁₀, ou -OR⁶, dans laquelle R⁶ est de l'hydrocarbyle C₁ à C₈ ou de l'hydrocarbyle substitué par de l'halogène C₁ à C₈, chaque R⁸ est indépendamment R¹, -H, ou un groupe sensible à un rayonnement, w va de 0 à 0,95, x va de 0 à 0,95, y va de 0 à 1, z va de 0 à 0,9, y+z va de 0,1 à 1, et w+x+y+z = 1, à condition que la résine de silicone ait une moyenne d'au moins deux groupes sensibles à un rayonnement liés par silicium par molécule ; ou
(e) (R¹R¹¹₂SiO_{1/2})_{w}(R¹¹₂SiO_{2/2})ₓ(R¹¹SiO_{3/2})_{y}(SiO_{4/2})_{z} (V), dans laquelle chaque R¹ est indépendamment de l'hydrocarbyle C₁ à C₁₀ ou de l'hydrocarbyle substitué par de l'halogène C₁ à C₁₀, tous deux ne présentant pas d'insaturation aliphatique ; chaque R¹¹ est indépendamment R¹, de l'alcényle, de l'alcynyle, de l'acryloxyalkyle, ou de l'acryloxyalkyle substitué ; w va de 0 à 0,95, x va de 0 à 0,95, y va de 0 à 1, z va de 0 à 0,9, y+z va de 0,1 à 1, et w+x+y+z = 1.

12. Une composition de silicone remplie de nanofibres comprenant :
(A) une composition de silicone durcissable comprenant une résine de silicone ; et
(B) des nanofibres d'oxyde d'aluminium, dans laquelle les nanofibres comprennent au moins un oxyde d'aluminium sélectionné parmi γ-AlO(OH) et γ-Al₂O₃.

13. La composition de silicone remplie de nanofibres selon la revendication 12, comprenant de plus un solvant, à condition que lorsque la composition de silicone durcissable est une composition de silicone durcissable par hydrosilylation, le solvant soit aprotique.

14. La composition de silicone remplie de nanofibres selon la revendication 12, dans laquelle la composition de silicone durcissable est sélectionnée parmi une composition de silicone durcissable par hydrosilylation, une composition de silicone durcissable par condensation, une composition de silicone durcissable par rayonnement, et une composition de silicone durcissable contenant du peroxyde.

15. La composition de silicone remplie de nanofibres selon la revendication 12, dans laquelle la concentration des nanofibres d'oxyde d'aluminium va de 0,001 à 50 % (m/m) sur la base du poids total de la composition de silicone remplie de nanofibres.
